# EUROPEAN PATENT APPLICATION

(11) **EP 4 716 156 A1**
(43) Date of publication of application: **25.03.2026**
(21) Application number: 24918878.0
(22) Date of filing: 17.01.2024
(51) Int. Cl.: H04L 9/40, B60K 35/00

(54) **SIGNAL PROCESSING DEVICE AND VEHICLE DISPLAY DEVICE HAVING SAME**

(71) Applicant: LG Electronics Inc., Yeongdeungpo-gu Seoul 07336 (KR)
(72) Inventor: JEONG, Daeyoung, Seoul 06772 (KR); SHIN, Kyungjun, Seoul 06772 (KR); OH, Soohwan, Seoul 06772 (KR); YOON, Jaegu, Seoul 06772 (KR)
(74) Representative: Vossius & Partner Patentanwälte Rechtsanwälte mbB
(86) International application number: PCT/KR2024/000831
(87) International publication number: WO 2025/154843

(57) **Abstract**

A signal processing device and a vehicle display apparatus including the same according to an embodiment of the present disclosure include a processor configured to execute a hypervisor, wherein the processor is configured to execute a network interface in the hypervisor and to execute a first intrusion detector and a second intrusion detector on the hypervisor, the first intrusion detector configured to perform external monitoring based on data received from the network interface, and the second intrusion detector configured to perform internal monitoring of event information or application information. Accordingly, it is possible to ensure the functional safety of a vehicle based on vehicle interior or exterior monitoring.

## Description

### BACKGROUND

### 1. Technical Field

The present disclosure relates to a signal processing device and a vehicle display apparatus including the same, and more particularly to a signal processing device capable of ensuring the functional safety of a vehicle based on vehicle interior or exterior monitoring, and a vehicle display apparatus including the signal processing device.

### 2. Description of the Related Art

A vehicle is a machine that allows a user to move in a desired direction. A typical example of the vehicle is an automobile.

Meanwhile, a signal processing device for vehicles is mounted in the vehicle for convenience of users who use the vehicle.

The signal processing device in the vehicle receives sensor data from various vehicle internal sensor devices and processes the sensor data.

Recently, a vehicle-internal software-based function is added dynamically or executed.

In this case, if there is an excessive access of a specific service or if bus occupancy for service operation increases intentionally without permission and thus results in overload on a channel, vehicle control for service operation is affected, thereby causing a serious threat to the functional safety of a vehicle.

### SUMMARY

It is an objective of the present disclosure to provide a signal processing device capable of ensuring the functional safety of a vehicle based on vehicle interior or exterior monitoring, and a vehicle display apparatus including the signal processing device.

Meanwhile, it is another objective of the present disclosure to provide a signal processing device capable of ensuring the functional safety of a vehicle by performing anomaly or intrusion detection on Service Oriented Architecture (SOA)-based services, and a vehicle display apparatus including the signal processing device.

Meanwhile, it is yet another objective of the present disclosure to provide a signal processing device capable of generating a policy rule based on anomaly detection or intrusion detection, and a vehicle display apparatus including the signal processing device.

In accordance with an aspect of the present disclosure, the above and other objectives can be accomplished by providing a signal processing device and a vehicle display apparatus including the same, which include a processor configured to execute a hypervisor, wherein the processor is configured to execute a network interface in the hypervisor and to execute a first intrusion detector and a second intrusion detector on the hypervisor, the first intrusion detector configured to perform external monitoring based on data received from the network interface, and the second intrusion detector configured to perform internal monitoring of event information or application information.

Meanwhile, the processor can be configured to execute a service virtual machine and a user virtual machine on the hypervisor, wherein at least one of the service virtual machine or the user virtual machine can be configured to execute the first intrusion detector and the second intrusion detector.

Meanwhile, the first intrusion detector can be configured to: execute a monitoring portion to store, in a queue, packet transmitted or received through the network interface in a kernel space; and execute a detector configured to perform anomaly detection or intrusion detection based on the packet from the monitoring portion in a user space on the kernel space.

Meanwhile, the detector in the first intrusion detector can be configured to classify the packet based on a policy rule and store the classified packet in a detection queue, and to perform the anomaly detection or the intrusion detection on data from the detection queue based on the policy rule.

Meanwhile, the detector in the first intrusion detector can be configured to classify the packet based on vehicle driving environment and store the classified packet in the detection queue, and to perform the anomaly detection or the intrusion detection on the data from the detection queue based on the policy rule.

Meanwhile, the second intrusion detector can be configured to execute a monitoring portion to store the event information or the application information in a queue in the user space on the kernel space, and to execute a detector to perform anomaly detection or intrusion detection based on the information from the monitoring portion.

Meanwhile, the detector in the second intrusion detector can be configured to classify the event information or the application information based on a policy rule and store the information in a detection queue, and to perform the anomaly detection or the intrusion detection on data from the detection queue based on the policy rule.

Meanwhile, the processor can be configured to generate a first policy rule for the first intrusion detector based on network information, and to generate a second policy rule for the second intrusion detector based on the network information, an operation rule, vehicle signal specification (VSS), state dependency, and quality of signal.

Meanwhile, upon receiving a door open signal, a rear-view mirror fold signal, a stopping signal, or a trunk open signal while driving a vehicle, the processor can be configured to determine anomaly detection or intrusion detection.

Meanwhile, upon receiving a headlight-off signal during night driving, the processor can be configured to determine anomaly detection or intrusion detection.

Meanwhile, upon receiving a wiper stop signal or a window open signal during driving in rain, the processor can be configured to determine anomaly detection or intrusion detection.

Meanwhile, the processor can be configured to receive data, received from a zonal signal processing device, through a Data Distribution Service (DDS), wherein the first intrusion detector can be configured to detect an Internet Protocol or port of data from the data distribution service, or to detect whether a traffic exceeds a reference traffic, or to detect an abnormal period.

Meanwhile, the second intrusion detector can be configured to detect whether quality of service (QoS) policy of data from the data distribution service is violated.

Meanwhile, the processor can be configured to execute a monitoring server, wherein upon receiving an anomaly detection or intrusion detection detected by a monitoring client executed in at least one zonal signal processing device, the monitoring server can be configured to transmit the anomaly detection or intrusion detection to an external server.

Meanwhile, the processor can be configured to execute a monitoring server, wherein the monitoring server can be configured to buffer, store, or manage an event of an anomaly detection received from the monitoring client executed in the at least one zonal signal processing device.

Meanwhile, the monitoring server can be configured to receive update information for each topic from the server, and to transmit the received update information to the monitoring client.

Meanwhile, in response to a hardware-based intrusion detector being in operation, the processor can be configured to deactivate a software-based intrusion detector.

Meanwhile, the processor can be configured to collect topic or stop collecting topic according to priority levels, based on system state monitoring and occupancy or bandwidth of the processor.

### EFFECTS OF THE DISCLOSURE

A signal processing device and a vehicle display apparatus including the same according to an embodiment of the present disclosure include a processor configured to execute a hypervisor, wherein the processor is configured to execute a network interface in the hypervisor and to execute a first intrusion detector and a second intrusion detector on the hypervisor, the first intrusion detector configured to perform external monitoring based on data received from the network interface, and the second intrusion detector configured to perform internal monitoring of event information or application information. Accordingly, it is possible to ensure the functional safety of a vehicle based on vehicle interior or exterior monitoring. Particularly, it is possible to ensure the functional safety of a vehicle by performing anomaly or intrusion detection on Service Oriented Architecture (SOA)-based services.

Meanwhile, the processor can be configured to execute a service virtual machine and a user virtual machine on the hypervisor, wherein at least one of the service virtual machine or the user virtual machine can be configured to execute the first intrusion detector and the second intrusion detector. Accordingly, it is possible to ensure the functional safety of a vehicle based on vehicle interior or exterior monitoring.

Meanwhile, the first intrusion detector can be configured to: execute a monitoring portion to store, in a queue, packet transmitted or received through the network interface in a kernel space; and execute a detector configured to perform anomaly detection or intrusion detection based on the packet from the monitoring portion in a user space on the kernel space. Accordingly, it is possible to ensure the functional safety of a vehicle based on vehicle interior or exterior monitoring.

Meanwhile, the detector in the first intrusion detector can be configured to classify the packet based on a policy rule and store the classified packet in a detection queue, and to perform the anomaly detection or the intrusion detection on data from the detection queue based on the policy rule. Accordingly, it is possible to ensure the functional safety of a vehicle based on vehicle interior or exterior monitoring.

Meanwhile, the detector in the first intrusion detector can be configured to classify the packet based on vehicle driving environment and store the classified packet in the detection queue, and to perform the anomaly detection or the intrusion detection on the data from the detection queue based on the policy rule. Accordingly, it is possible to ensure the functional safety of a vehicle based on vehicle interior or exterior monitoring.

Meanwhile, the second intrusion detector can be configured to execute a monitoring portion to store the event information or the application information in a queue in the user space on the kernel space, and to execute a detector to perform anomaly detection or intrusion detection based on the information from the monitoring portion. Accordingly, it is possible to ensure the functional safety of a vehicle based on vehicle interior or exterior monitoring.

Meanwhile, the detector in the second intrusion detector can be configured to classify the event information or the application information based on a policy rule and store the information in a detection queue, and to perform the anomaly detection or the intrusion detection on data from the detection queue based on the policy rule. Accordingly, it is possible to ensure the functional safety of a vehicle based on vehicle interior or exterior monitoring.

Meanwhile, the processor can be configured to generate a first policy rule for the first intrusion detector based on network information, and to generate a second policy rule for the second intrusion detector based on the network information, an operation rule, vehicle signal specification (VSS), state dependency, and quality of signal. Accordingly, the policy rules can be generated based on the anomaly detection or the intrusion detection.

Meanwhile, upon receiving a door open signal, a rear-view mirror fold signal, a stopping signal, or a trunk open signal while driving a vehicle, the processor can be configured to determine anomaly detection or intrusion detection. Accordingly, it is possible to ensure the functional safety of a vehicle based on vehicle interior or exterior monitoring.

Meanwhile, upon receiving a headlight-off signal during night driving, the processor can be configured to determine anomaly detection or intrusion detection. Accordingly, it is possible to ensure the functional safety of a vehicle based on vehicle interior or exterior monitoring.

Meanwhile, upon receiving a wiper stop signal or a window open signal during driving in rain, the processor can be configured to determine anomaly detection or intrusion detection. Accordingly, it is possible to ensure the functional safety of a vehicle based on vehicle interior or exterior monitoring.

Meanwhile, the processor can be configured to receive data, received from a zonal signal processing device, through a Data Distribution Service (DDS), wherein the first intrusion detector can be configured to detect an Internet Protocol or port of data from the data distribution service, or to detect whether a traffic exceeds a reference traffic, or to detect an abnormal period. Accordingly, it is possible to ensure the functional safety of a vehicle based on vehicle interior or exterior monitoring.

Meanwhile, the second intrusion detector can be configured to detect whether quality of service (QoS) policy of data from the data distribution service is violated. Accordingly, it is possible to ensure the functional safety of a vehicle based on vehicle interior or exterior monitoring.

Meanwhile, the processor can be configured to execute a monitoring server, wherein upon receiving an anomaly detection or intrusion detection detected by a monitoring client executed in at least one zonal signal processing device, the monitoring server can be configured to transmit the anomaly detection or intrusion detection to an external server. Accordingly, it is possible to ensure the functional safety of a vehicle based on vehicle interior or exterior monitoring.

Meanwhile, the processor can be configured to execute a monitoring server, wherein the monitoring server can be configured to buffer, store, or manage an event of an anomaly detection received from the monitoring client executed in the at least one zonal signal processing device. Accordingly, it is possible to ensure the functional safety of a vehicle based on vehicle interior or exterior monitoring.

Meanwhile, the monitoring server can be configured to receive update information for each topic from the server, and to transmit the received update information to the monitoring client. Accordingly, it is possible to ensure the functional safety of a vehicle based on vehicle interior or exterior monitoring.

Meanwhile, in response to a hardware-based intrusion detector being in operation, the processor can be configured to deactivate a software-based intrusion detector. Accordingly, it is possible to ensure the functional safety of a vehicle based on vehicle interior or exterior monitoring.

Meanwhile, the processor can be configured to collect topic or stop collecting topic according to priority levels, based on system state monitoring and occupancy or bandwidth of the processor. Accordingly, it is possible to ensure the functional safety of a vehicle based on vehicle interior or exterior monitoring.

### BRIEF DESCRIPTION OF THE DRAWINGS

FIG. 1 is a diagram illustrating an example of the exterior and interior of a vehicle;
FIGS. 2A to 2C are diagrams illustrating various architectures of a vehicle communication gateway;
FIG. 3A is a diagram illustrating an example of a vehicle display apparatus in a vehicle;
FIG. 3B is a diagram illustrating another example of a vehicle display apparatus in a vehicle;
FIG. 4 is an internal block diagram illustrating an example of a vehicle display apparatus of FIG. 3B;
FIGS. 5A to 5D are diagrams illustrating various examples of a vehicle display apparatus;
FIG. 6 is a block diagram illustrating an example of a vehicle display apparatus according to an embodiment of the present disclosure;
FIG. 7 is a block diagram illustrating another example of a vehicle display apparatus according to an embodiment of the present disclosure;
FIGS. 8A and 8B are diagrams referred to in the description of FIG. 6 or FIG. 7;
FIG. 9 is an exemplary block diagram of a vehicle display system according to an embodiment of the present disclosure;
FIGS. 10A to 10C are block diagrams illustrating various examples of a signal processing device according to an embodiment of the present disclosure; and
FIGS. 11A to 24B are diagrams referred to in the description of FIGS. 9 to 10C.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

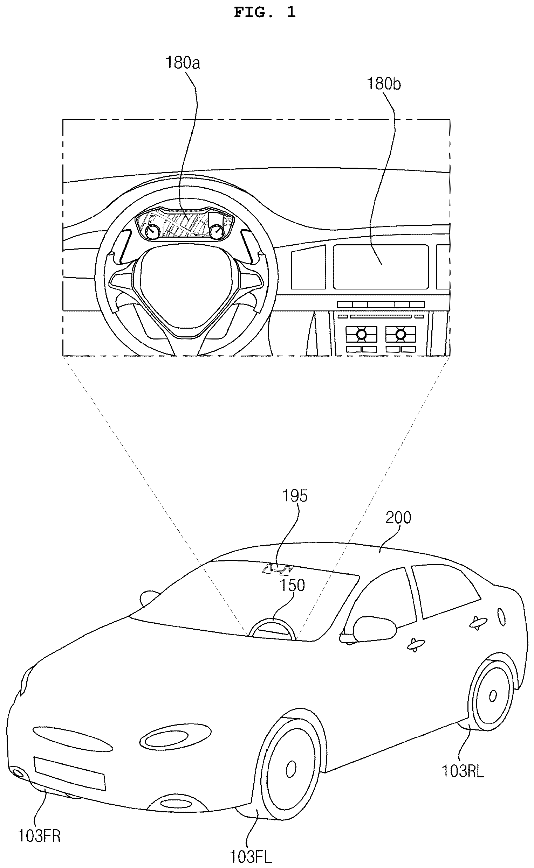

FIG. 1 is a diagram illustrating an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b, and a head-up display (HUD) is illustrated as the image projecting device 180h.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

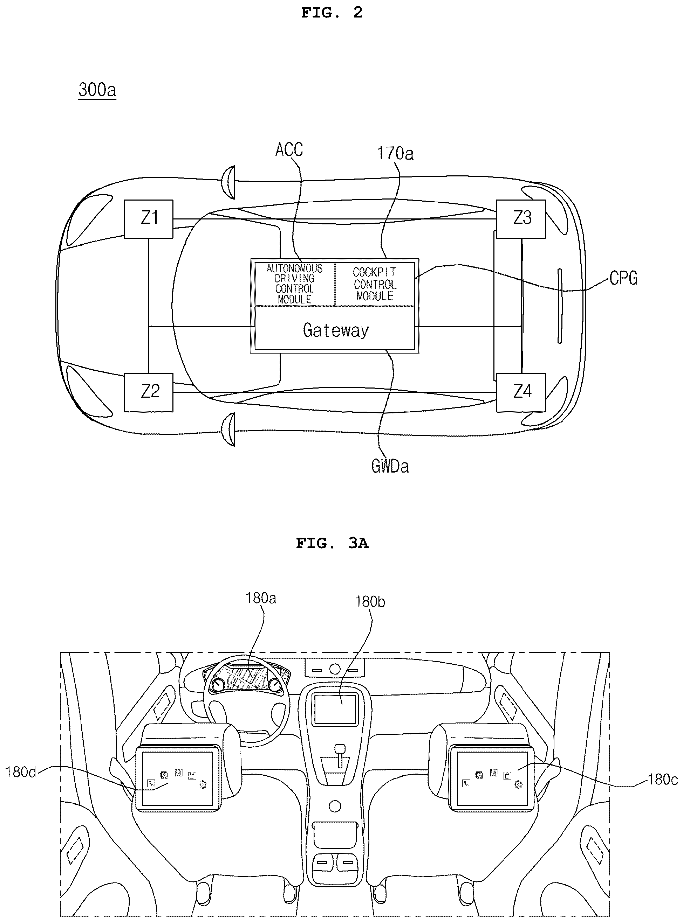

FIGS. 2A to 2C are diagrams illustrating various architectures of a vehicle communication gateway.

First, FIG. 2 is a diagram illustrating a first architecture of the vehicle communication gateway.

Referring to the figure, a first architecture 300a can correspond to a zone-based architecture.

Accordingly, vehicle internal sensor devices and processors can be mounted in each of a plurality of zones Z1 to Z4, and a signal processing device 170a including a vehicle communication gateway GWDa can be disposed at the center of the plurality of zones Z1 to Z4.

Meanwhile, the signal processing device 170a can further include an autonomous driving control module ACC, a cockpit control module CPG, etc., in addition to the vehicle communication gateway GWDa.

The vehicle communication gateway GWDa in the signal processing device 170a can be a High Performance Computing (HPC) gateway.

That is, as an integrated HPC gateway, the signal processing device 170a of FIG. 2 can exchange data with an external communication module (not shown) or processors (not shown) in the plurality of zones Z1 to Z4.

FIG. 3A is a diagram illustrating an example of a vehicle display apparatus in a vehicle.

Referring to the figure, a cluster display 180a, an audio video navigation (AVN) display 180b, rear seat entertainment displays 180c and 180d, and a rear-view mirror display (not shown) can be mounted in the vehicle.

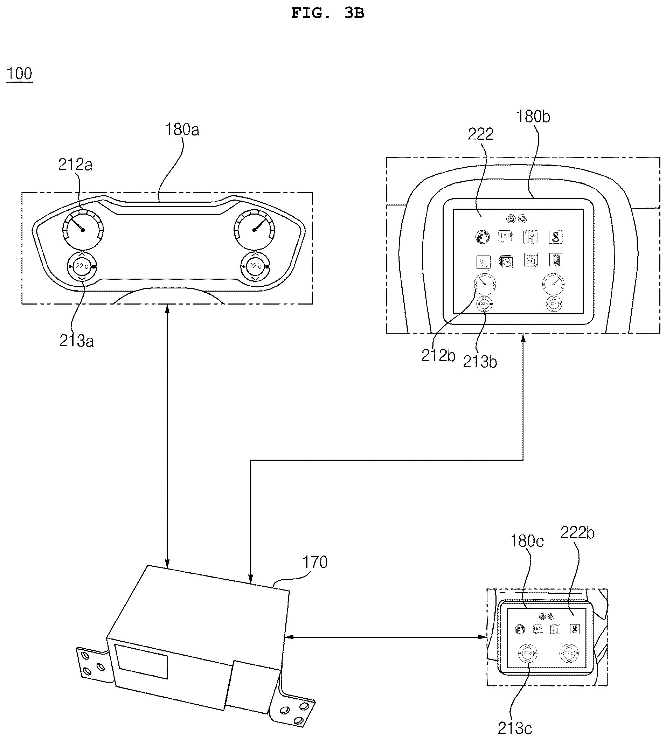

FIG. 3B is a diagram illustrating another example of a vehicle display apparatus in a vehicle.

A vehicle display apparatus 100 according to the embodiment of the present disclosure can include a plurality of displays 180a and 180b and a signal processing device 170 configured to perform signal processing in order to display images and information on the plurality of displays 180a and 180b, and to output an image signal to at least one of the displays 180a or 180b.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can receive and process wheel speed sensor data of the vehicle, and can transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle display apparatus 100 according to the embodiment of the present disclosure can further include a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to the embodiment of the present disclosure can be configured to display the same information or the same images in a synchronized state on the displays 180a to 180c to be operated under various operating systems.

Meanwhile, FIG. 3B illustrates an example in which a vehicle speed indicator 212a and a vehicle internal temperature indicator 213a are displayed on a first display 180a, a home screen 222 including a plurality of applications, a vehicle speed indicator 212b, and a vehicle internal temperature indicator 213b is displayed on a second display 180b, and a second home screen 222b including a plurality of applications and a vehicle internal temperature indicator 213c is displayed on a third display 180c.

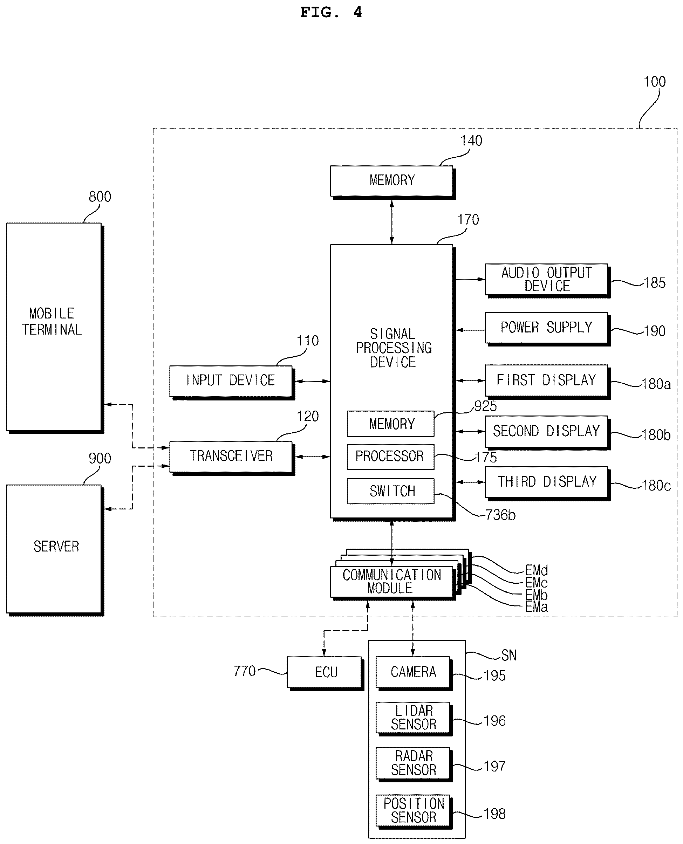

FIG. 4 is an internal block diagram illustrating an example of the vehicle display apparatus of FIG. 3B.

Referring to FIG. 4, a vehicle display apparatus 100 according to an embodiment of the present disclosure can include an input device 110, a transceiver 120 for communication with an external device, a plurality of communication modules EMa to EMd for internal communication, a memory 140, the signal processing device 170, a plurality of displays 180a to 180c, an audio output device 185, and a power supply 190.

The plurality of communication modules EMa to EMd can be disposed in a plurality of zones Z1 to Z4, respectively, in FIG. 2.

Meanwhile, the signal processing device 170 can be provided therein with a communication switch 736b for data communication with the respective communication modules EM1 to EM4.

The respective communication modules EM1 to EM4 can perform data communication with the plurality of sensor devices SN or the ECU 770.

Meanwhile, a plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 800 or a server 900.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can receive weather information and road traffic state information, such as Transport Protocol Experts Group (TPEG) information, from a mobile terminal 800 or a server 900. To this end, the transceiver 120 can include a mobile communication module (not shown).

The plurality of communication modules EM1 to EM4 can receive sensor data and the like from the electronic control unit (ECU) 770 or the sensor device SN or a zonal signal processing device 170Z, and can transmit the received sensor data to the signal processing device 170.

Here, the sensor data can include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, or vehicle internal humidity data.

The sensor data can be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

Meanwhile, the position module can include a GPS module configured to receive GPS information or a position sensor 198.

Meanwhile, at least one of the plurality of communication modules EM1 to EM4 can transmit position information data sensed by the GPS module or the position sensor 198 to the signal processing device 170.

Meanwhile, at least one of the plurality of communication modules EM1 to EM4 can receive front image data of the vehicle, side-of-vehicle image data, rear image data of the vehicle, and obstacle-around-vehicle distance information from the camera 195, the lidar sensor 196, or the radar sensor 197, etc., and can transmit the received information to the signal processing device 170.

The memory 140 can store various data necessary for overall operation of the vehicle display apparatus 100, such as programs for processing or control of the signal processing device 170.

For example, the memory 140 can store data about the hypervisor and first to third virtual machines executed by the hypervisor in the processor 175.

The audio output device 185 can convert an electrical signal from the signal processing device 170 into an audio signal, and can output the audio signal. To this end, the audio output device 185 can include a speaker.

The power supply 190 can supply power necessary to operate components under control of the signal processing device 170. In particular, the power supply 190 can receive power from a battery in the vehicle.

The signal processing device 170 can control the overall operation of each device in the vehicle display apparatus 100.

For example, the signal processing device 170 can include a processor 175 configured to perform signal processing for the vehicle displays 180a and 180b.

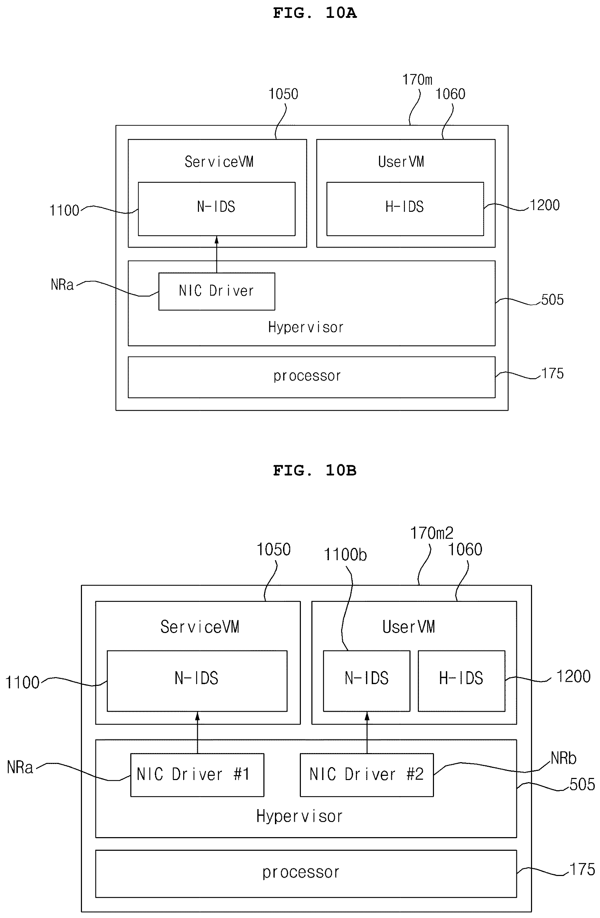

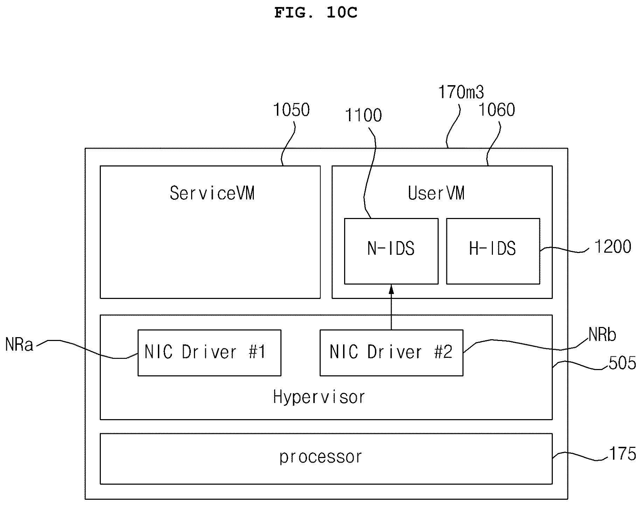

The processor 175 can execute the first to third virtual machines (not shown) on the hypervisor 505 (see FIG. 10) in the processor 175.

Among the first to third virtual machines (not shown) (see FIG. 10), the first virtual machine (not shown) can be called a server virtual machine, and the second and third virtual machines (not shown) and (not shown) can be called guest virtual machines.

For example, the first virtual machine (not shown) in the processor 175 can receive sensor data from the plurality of sensor devices, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process CAN data, Ethernet data, audio data, radio data, USB data, and wireless communication data for the second and third virtual machines (not shown).

Further, the first virtual machine (not shown) can transmit the processed data to the second and third virtual machines (not shown).

Accordingly, only the first virtual machine (not shown), among the first to third virtual machines (not shown), can receive sensor data from the plurality of sensor devices, communication data, or external input data, and can perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals, such as an audio signal, an image signal, and a data signal. To this end, the signal processing device 170 can be implemented in the form of a system on chip (SOC).

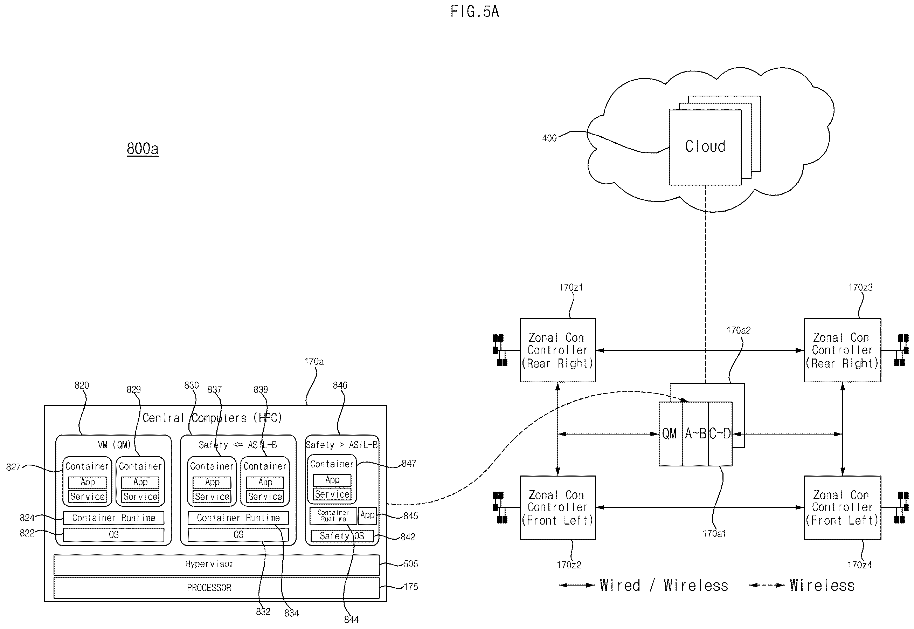

Meanwhile, the signal processing device 170 in the display apparatus 100 of FIG. 4 can be the same as signal processing devices 170, 170a1, and 170a2 of a vehicle display apparatus of FIG. 5A and subsequent figures.

FIGS. 5A to 5D are diagrams illustrating various examples of a vehicle display apparatus.

FIG. 5A is a diagram illustrating an example of a vehicle display apparatus according to an embodiment of the present disclosure.

Referring to FIG. 5A, a vehicle display apparatus 800a according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 can exchange data with the communication device 120 based on wired communication.

Meanwhile, the data received by the signal processing devices 170a1 and 170a2 can include camera data or sensor data.

For example, the vehicle internal sensor data can include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, vehicle internal humidity data, external vehicle radar data or external vehicle lidar data.

Meanwhile, the camera data can include external vehicle camera data and vehicle internal camera data.

Meanwhile, the signal processing devices 170a1 and 170a2 can execute a plurality of virtual machines 820, 830, and 840 based on safety levels.

In the drawing, an example is illustrated in which the processor 175 in the signal processing device 170a executes the hypervisor 505, and executes first to third virtual machines 820 to 840 on the hypervisor 505 according to the Automotive Safety Integrity Level (ASIL).

The first virtual machine 820 can be a virtual machine corresponding to quality management (QM) which is the lowest risk level of the ASIL with no mandatory need.

The first virtual machine 820 can execute an operating system 822, a container runtime 824 on the operating system 822, and containers 827 and 829 on the container runtime 824.

The second virtual machine 820 can be a virtual machine corresponding to ASIL A or ASIL B with the combination of severity, exposure, and controllability values being 7 or 8.

The second virtual machine 820 can execute an operating system 832, a container runtime 834 on the operating system 832, and containers 837 and 839 on the container runtime 834.

The third virtual machine 840 can be a virtual machine corresponding to ASIL C or ASIL D with the combination of severity, exposure, and controllability values being 9 or 10.

Meanwhile, ASIL D can correspond to a grade that requires the highest level of safety.

The third virtual machine 840 can execute a safety operating system 842 and an application 845 on the operating system 842.

Meanwhile, the third virtual machine 840 can also execute the safety operating system 842, a container runtime 844 on the safety operating system 842, and a container 847 on the container runtime 844.

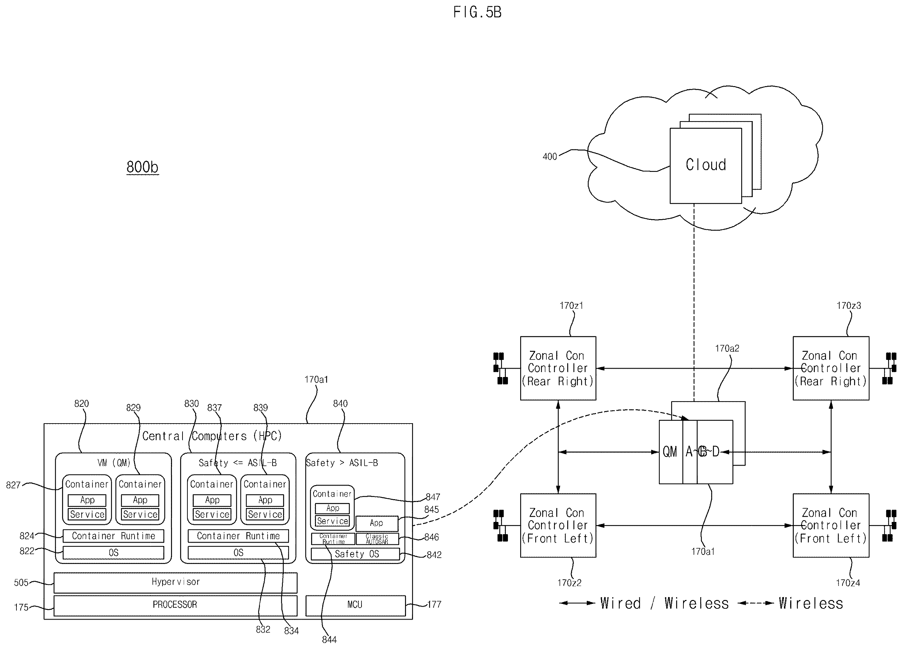

Meanwhile, unlike the drawing, the third virtual machine 840 can also be executed by a separate core, rather than by the processor 175, which will be described below with reference to FIG. 5B.

FIG. 5B is a diagram illustrating another example of a vehicle display apparatus according to an embodiment of the present disclosure.

Referring to FIG. 5B, a vehicle display apparatus 800b according to an embodiment of the present disclosure includes signal processing devices 170a1 and 170a2 and a plurality of zonal signal processing devices 170Z1 to 170Z4.

The vehicle display apparatus 800b of FIG. 5B is similar to the vehicle display apparatus 800a of FIG. 5A, with a difference being that the signal processing device 170a1 of FIG. 5B is partially different from the signal processing device 170a1 of FIG. 5A.

The following description will focus on the difference, in which the signal processing device 170a can include a processor 175 and a second processor 177.

The processor 175 in the signal processing device 170a1 executes the hypervisor 505, and executes the first and second virtual machines 820 and 830 on the hypervisor 505 according to the ASIL.

The first virtual machine 820 can execute the operating system 822, the container runtime 824 on the operating system 822, and the containers 827 and 829 on the container runtime 824.

The second virtual machine 820 can execute the operating system 832, the container runtime 834 on the operating system 832, and the containers 837 and 839 on the container runtime 834.

Meanwhile, the second processor 177 in the signal processing device 170a1 can execute the third virtual machine 840.

The third virtual machine 840 can execute the safety operating system 842, an AUTOSAR 845 on the operating system 842, and an application 845 on the AUTOSAR 845. That is, unlike FIG. 5A, the third virtual machine 840 can further execute the AUTOSAR 846 on the operating system 842.

Meanwhile, similarly to FIG. 5A, the third virtual machine 840 can also execute the safety operating system 842, the container runtime 844 on the safety operating system 842, and the container 847 on the container runtime 844.

Meanwhile, unlike the first and second virtual machines 820 and 830, the third virtual machine 840 that requires a high safety level is desirably executed by the second processor 177 that is a different core or a different processor.

Meanwhile, in the signal processing devices 170a1 and 170a2 of FIGS. 5A and 5B, if there is abnormality in the first signal processing device 170a, the second signal processing device 170a can operate which is provided for backup purposes.

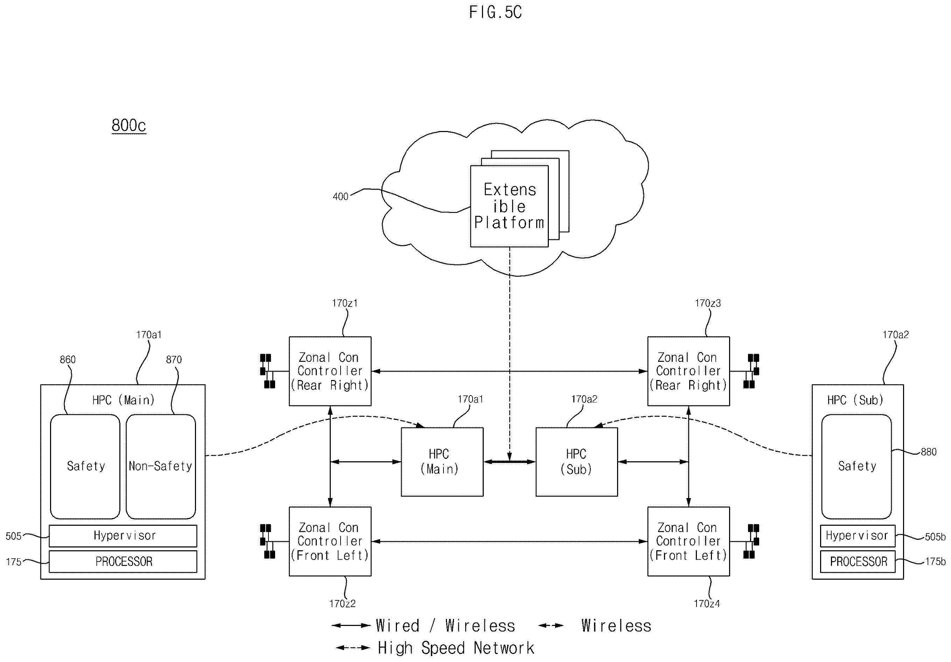

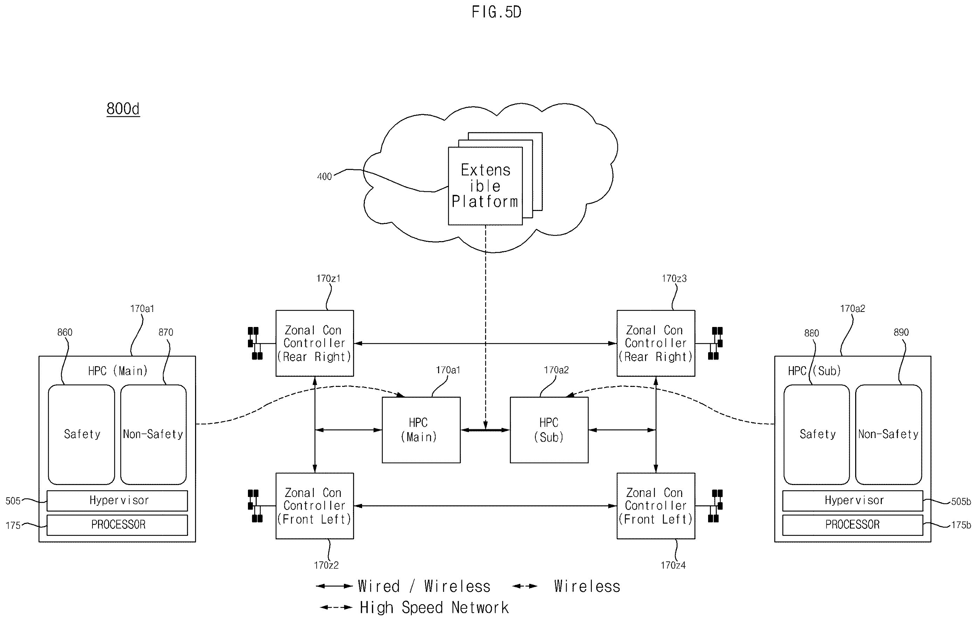

Unlike the example, the signal processing devices 170a1 and 170a2 can operate at the same time, among which the first signal processing device 170a can operate as a main device, and the second signal processing device 170a2 can operate as a sub device, which will be described below with reference to FIGS. 5C and 5D.

FIG. 5C is a diagram illustrating yet another example of a vehicle display apparatus according to an embodiment of the present disclosure.

Referring to FIG. 5C, a vehicle display apparatus 800c according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 exchange data with the communication device 120 based on wired communication.

Meanwhile, the data received by the signal processing devices 170a1 and 170a2 can include camera data or sensor data.

Meanwhile, the processor 175 in the first signal processing device 170a1 of the signal processing devices 170a1 and 170a2 can execute the hypervisor 505, and can execute each of a safety virtual machine 860 and a non-safety virtual machine 870 on the hypervisor 505.

Meanwhile, the processor 175b in the second signal processing device 170a2 of the signal processing devices 170a1 and 170a2 can execute the hypervisor 505b, and can execute only a safety virtual machine 880 on the hypervisor 505.

In the method, safety and non-safety virtual machines can be processed separately by the first signal processing device 170a1 and the second signal processing device 170a2, thereby improving stability and processing speed.

Meanwhile, high-speed network communication can be performed between the first signal processing device 170a1 and the second signal processing device 170a2.

FIG. 5D is a diagram illustrating yet another example of a vehicle display apparatus according to an embodiment of the present disclosure.

Referring to FIG. 5D, a vehicle display apparatus 800d according to an embodiment of the present disclosure includes signal processing devices 170a1 and 170a2 and a plurality of zonal signal processing devices 170Z1 to 170Z4.

The vehicle display apparatus 800d of FIG. 5D is similar to the vehicle display apparatus 800c of FIG. 5C, with a difference being that the second signal processing device 170a2 of FIG. 5D is partially different from the second signal processing device 170a2 of FIG. 5C.

The processor 175b in the second signal processing device 170a2 of FIG. 5D can execute the hypervisor 505b, and can execute each of a safety virtual machine 880 and a non-safety virtual machine 890 on the hypervisor 505.

That is, unlike FIG. 5C, there is a difference in that the processor 175b in the second signal processing device 170a2 further executes the non-safety virtual machine 890.

In the method, safety and non-safety virtual machines can be processed separately by the first signal processing device 170a1 and the second signal processing device 170a2, thereby improving stability and processing speed.

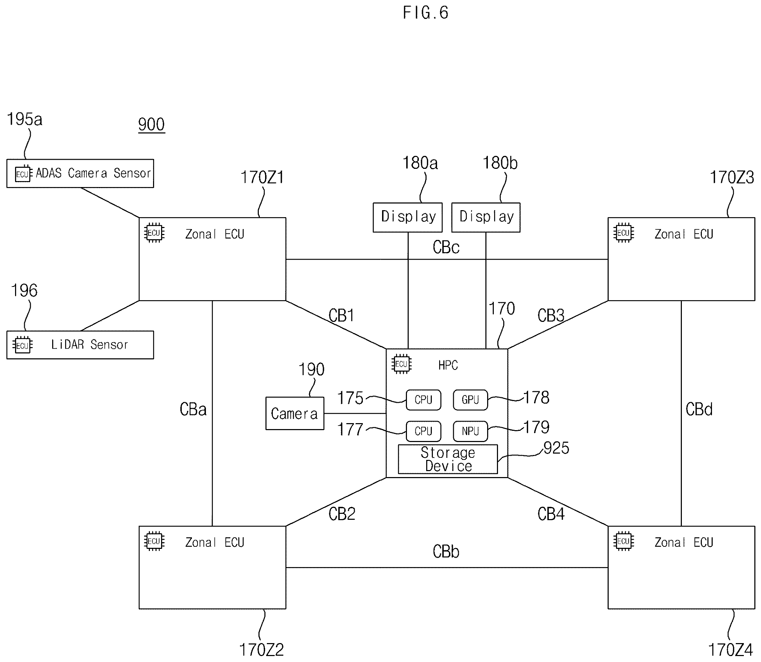

FIG. 6 is an exemplary block diagram of a vehicle display apparatus according to an embodiment of the present disclosure.

Referring to FIG. 6, a vehicle display apparatus 900 according to an embodiment of the present disclosure includes the signal processing device 170 and at least one display.

In the drawing, the cluster display 180a and the audio video navigation (AVN) display 180b are illustrated as the at least one display.

Meanwhile, the vehicle display apparatus 900 can further include the plurality of zonal signal processing devices 170Z1 to 170Z4.

In this case, the signal processing device 170 is a high-performance centralized signal processing and control device including a plurality of CPUs 175, GPUs 178, NPUs 179, etc., and can be referred to as a High Performance Computing (HPC) signal processing device or a central signal processing device.

The plurality of zonal signal processing devices 170Z1 to 170Z4 and the signal processing device 170 can be connected via wired cables CB1 to CB4.

Meanwhile, the plurality of zonal signal processing devices 170Z1 to 170Z4 can be connected via wired cables CBa to CBd.

In this case, the wired cables CBa to CBd can include CAN communication cable or Ethernet communication cable, or PCI Express cable.

Meanwhile, the signal processing device 170 according to an embodiment of the present disclosure can include at least one processor 175, 178, and 177, and a storage device 925 having a large capacity.

For example, the signal processing device 170 according to an embodiment of the present disclosure can include central processors 175 and 177, a graphic processor 178, and a neural processor 179.

Meanwhile, sensor data can be transmitted from at least one of the plurality of zonal signal processing devices 170Z1 to 170Z4 to the signal processing device 170. Particularly, the sensor data can be stored in the storage device 925 in the signal processing device 170.

In this case, the sensor data can include at least one of camera data, lidar data, radar data, vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data or vehicle internal humidity data.

In the drawing, an example is illustrated in which the camera data from the camera 195a and the lidar data from the lidar sensor 196 are input to a first zonal signal processing device 170Z1, and the camera data and the lidar data are transmitted to the signal processing device 170 via a second zonal signal processing device 170Z2 and a third zonal signal processing device 170Z3, and the like.

Meanwhile, data write speed or data read speed to write and read data to and from the storage device 925 is faster than a network speed when the sensor data is transmitted from at least one of the plurality of zonal signal processing devices 170Z1 to 170Z4 to the signal processing device 170, such that it is preferred to perform multi path routing so as to avoid bottlenecks in a network.

To this end, the signal processing device 170 according to an embodiment of the present disclosure can perform multi path routing based on Software Defined Network (SDN). Accordingly, stable network environment for data write and read operations can be ensured. Further, data can be transmitted to the storage device 925 by using multiple paths, such that data can be transmitted by dynamically changing a network configuration.

It is desirable that data communication between the plurality of zonal signal processing devices 170Z1 to 170Z4 and the signal processing device 170 in the vehicle display apparatus 900 according to an embodiment of the present disclosure is peripheral component interconnect express communication in order to provide high band and low delay communication.

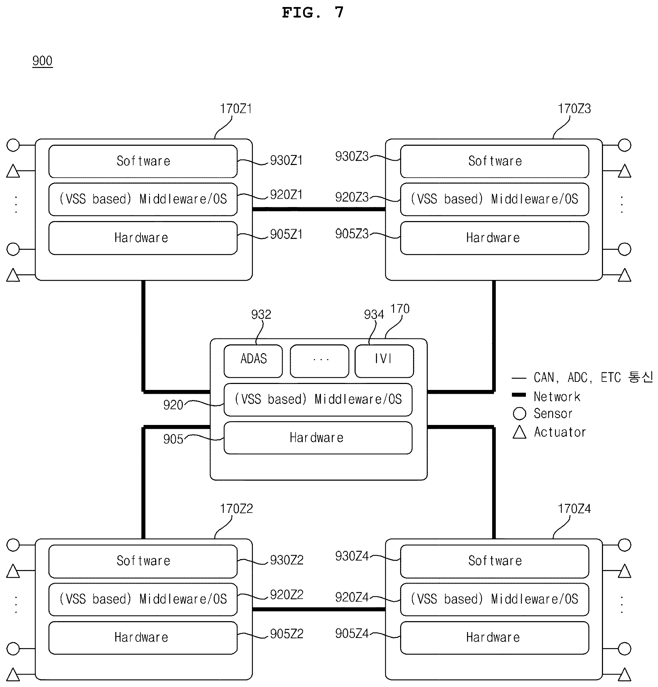

FIG. 7 is a block diagram illustrating another example of a vehicle display apparatus according to an embodiment of the present disclosure.

Referring to FIG. 7, a vehicle display apparatus 900 according to an embodiment of the present disclosure can include a central signal processing device 170 and at least one display.

Meanwhile, the vehicle display apparatus 900 can further include a plurality of zonal signal processing devices 170Z1 to 170Z4.

The plurality of zonal signal processing devices 170Z1 to 170Z4 can receive sensor data from a sensor device or can output a driving signal for driving an actuator.

Meanwhile, in the present disclosure, a common middleware is executed on the operating system in order to perform high-speed communication and stable communication between the plurality of zonal signal processing devices 170Z1 to 170Z4.

For example, the common middleware can be a middleware based on Vehicle Signal Specification (VSS).

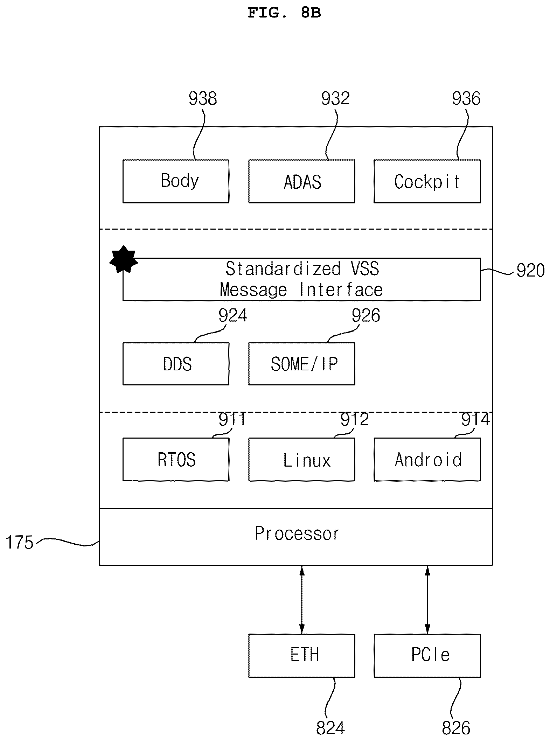

The central signal processing device 170 according to an embodiment of the present disclosure includes hardware 905 such as the processor 175, and the processor 175 executes an operating system 911 (see FIG. 8B), executes the VSS-based middleware 920 on the operating system 911, and executes applications 932 and 934 on the VSS-based middleware 920.

Meanwhile, the plurality of zonal signal processing devices 170Z1 to 170Z4 according to an embodiment of the present disclosure includes hardware 905Z1 to 905Z4 such as the processors 175Z1 to 170Z4, respectively, in which the respective processors 175Z1 to 170Z4 execute each operating system, execute the VSS-based middleware 920Z1 to 920Z4 on each operating system, and execute software 920Z1 to 920Z4, such as applications, on each VSS-based middleware 920Z1 to 920Z4.

Meanwhile, by using a VSS-based message interface 920, the processor 175 in the central signal processing device 170 according to an embodiment of the present disclosure controls a message to be received from or transmitted to VSS-based message interfaces 920Z1 to 920Z4 in the plurality of zonal signal processing devices 170Z1 to 170Z4. Accordingly, it is possible to ensure the functional safety of a vehicle based on vehicle interior or exterior monitoring.

Particularly, during communication with an adjacent second signal processing device 170Z1 by using the VSS-based message interface 920, the processor 175 in the central signal processing device 170 according to an embodiment of the present disclosure controls a message to be received from or transmitted to a second VSS-based message interface 920 in the second signal processing device 170Z1. Accordingly, it is possible to ensure the functional safety of a vehicle based on vehicle interior or exterior monitoring.

Meanwhile, the processor 175 in the central signal processing device 170 controls a message to be received or transmitted using the VSS-based message interface 920 during communication with the second signal processing device 170Z1 having a different operating system. Accordingly, it is possible to ensure the functional safety of a vehicle based on vehicle interior or exterior monitoring.

Meanwhile, the processor 175 in the central signal processing device 170 can execute an application 934 for controlling an IVI display 180b or an application 932 for vehicle driving assistance on the VSS-based middleware 920. Accordingly, each of the applications 932 and 934 can be stably executed.

Meanwhile, the respective processors 175Z1 to 170Z4 in the plurality of zonal signal processing devices 170Z1 to 170Z4 according to an embodiment of the present disclosure controls a message to be received from or transmitted to the VSS-based message interface 920 in the central signal processing device 170 by using the VSS-based message interfaces 920Z1 to 920Z4. Accordingly, it is possible to ensure the functional safety of a vehicle based on vehicle interior or exterior monitoring.

Meanwhile, the plurality of zonal signal processing devices 170Z1 to 170Z4 can perform CAN communication with a sensor device or an actuator.

Meanwhile, the plurality of zonal signal processing devices 170Z1 to 170Z4 can perform Ethernet communication or PCIe communication with the central signal processing device 170.

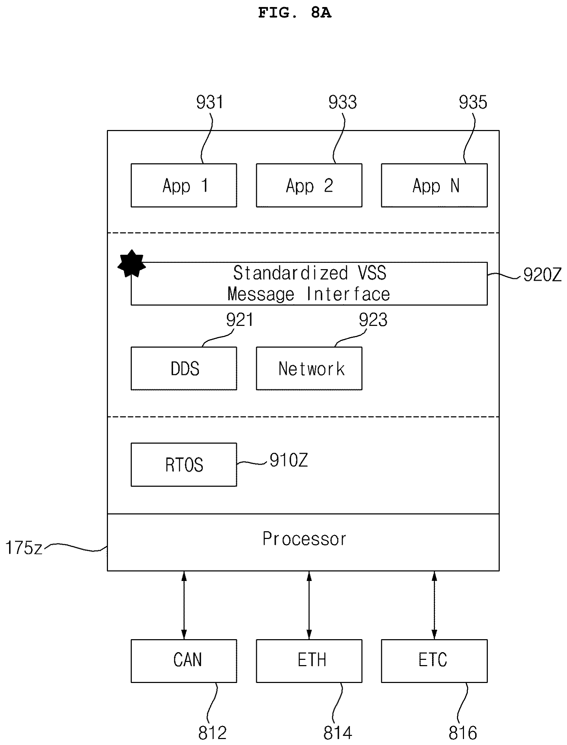

FIGS. 8A and 8B are diagrams referred to in the description of FIG. 6 or FIG. 7.

FIG. 8A is a diagram illustrating an example of operation of a processor in the zonal signal processing device of FIG. 7.

Referring to FIG. 8A, a processor 175Z in the zonal signal processing device 170Z can receive or transmit a CAN message from or to a CAN interface 812 for CAN communication with a sensor device or an actuator.

Meanwhile, the processor 175Z in the zonal signal processing device 170Z can receive or transmit an Ethernet message from or to an Ethernet interface 814 for communication with the central signal processing device 170.

Meanwhile, the processor 175Z in the zonal signal processing device 170Z executes a real-time operating system (RTOS) 910Z, executes the VSS-based middleware 920Z on the operating system 910Z, and executes applications 931, 933, and 935 on the VSS-based middleware 920Z.

The processor 175Z in the zonal signal processing device 170Z can further execute a Data Distribution Service (DDS) 921, a network 923, or the like on the operating system 910Z, thereby ensuring high computing performance in data processing.

Meanwhile, each of the plurality of zonal signal processing devices 170Z1 to 170Z4 executes the common VSS-based middleware 920Z, thereby performing high-speed communication and stable communication between the plurality of zonal signal processing devices 170Z1 to 170Z4.

Meanwhile, the processor 175Z in the zonal signal processing device 170Z executes the real-time operating system 910Z, executes the message interface 920Z, which is the VSS-based middleware, on the operating system 910Z, and executes the applications 931, 933, and 935 on the VSS-based message interface 920Z.

Meanwhile, each of the plurality of zonal signal processing devices 170Z1 to 170Z4 executes the common VSS-based message interface 920Z, thereby performing high-speed communication and stable communication between the plurality of zonal signal processing devices 170Z1 to 170Z4.

FIG. 8B is a diagram illustrating an example of operation of a processor in the central signal processing device of FIG. 7.

Referring to FIG. 8B, the processor 175 in the central signal processing device 170 can receive or transmit an Ethernet message from or to an Ethernet interface 824 for communication with the plurality of zonal signal processing devices 170Z1 to 170Z4.

Meanwhile, the processor 175 in the central signal processing device 170 can receive or transmit a PCIe message from or to a PCIe interface 826 for communication with the plurality of zonal signal processing devices 170Z1 to 170Z4, the memory 140, the display 180, or the transceiver 120.

Meanwhile, the processor 175 in the central signal processing device 170 executes an operating system, executes the VSS-based middleware 920 on the operating system, and executes applications 932, 936, and 938 on the VSS-based middleware 920.

Particularly, the processor 175 can execute an application 936 for controlling the display 180 or an application 932 for vehicle driving assistance on the VSS-based middleware 920. Accordingly, the applications can be stably executed.

In this case, the operating system can include the real-time operating system (RTOS) 911, Linux 912, or Android 914.

Meanwhile, the central signal processing device 170 can be a computing device having higher computing performance than the plurality of zonal signal processing devices 170Z1 to 170Z4, and the operating system of the central signal processing device 170 can be different from the operating system of the plurality of zonal signal processing devices 170Z1 to 170Z4.

Meanwhile, the processor 175 in the central signal processing device 170 can further execute a Data Distribution Service (DDS) 924 or a Scalable service-Oriented MiddlewarE over IP (SOM/IP) on the operating system, thereby ensuring high computing performance in data processing.

Meanwhile, the central signal processing device 170 executes the same common VSS-based middleware 920 as that of the plurality of zonal signal processing devices 170Z1 to 170Z4, thereby performing high-speed communication and stable communication between the central signal processing device 170 and the plurality of zonal signal processing devices 170Z1 to 170Z4.

Particularly, the central signal processing device 170 and the first zonal signal processing device 170Z1 execute the common VSS-based middleware, thereby performing high-speed communication and stable communication between the central signal processing device 170 and the first zonal signal processing device 170Z1.

Meanwhile, the processor 175 in the central signal processing device 170 executes an operating system, executes the message interface 920, which is the VSS-based middleware, on the operating system, and executes the applications 932, 936, and 938 on the VSS-based message interface 920.

Meanwhile, the central signal processing device 170 and each of the plurality of zonal signal processing devices 170Z1 to 170Z4 execute the common VSS-based message interface, thereby performing high-speed communication and stable communication between the central signal processing device 170 and the plurality of zonal signal processing devices 170Z1 to 170Z4.

Particularly, the central signal processing device 170 and the first zonal signal processing device 170Z1 execute the common VSS-based message interface, thereby performing high-speed communication and stable communication between the central signal processing device 170 and the first zonal signal processing device 170Z1.

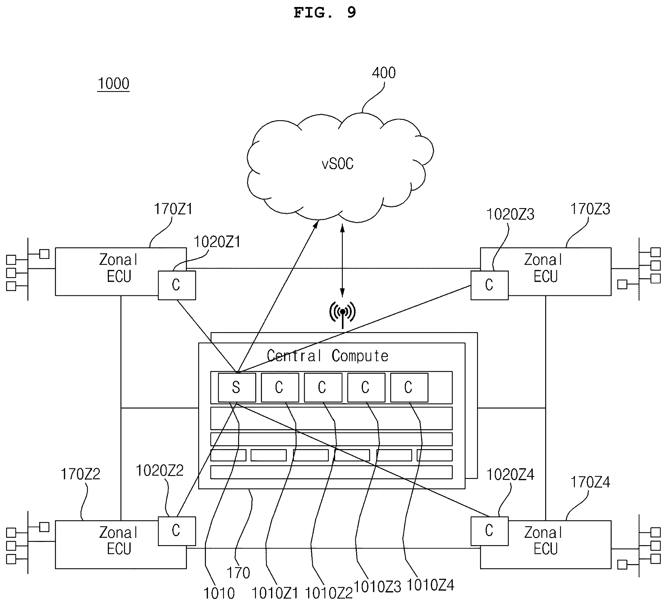

FIG. 9 is an exemplary block diagram of a vehicle display system according to an embodiment of the present disclosure.

Referring to FIG. 9, a vehicle display system 1000 according to an embodiment of the present disclosure can include a central signal processing device 170 in a vehicle, at least one zonal signal processing device 170Z1 to 170Z4, and an external server 400.

The central signal processing device 170 or the at least one zonal signal processing device 170Z1 to 170Z4 can execute various vehicle function services, applications, or the like.

In this case, the central signal processing device 170 or the at least one zonal signal processing device 170Z1 to 170Z4 can split the vehicle function service or application into a plurality of microservices when executing the vehicle function service or application.

Meanwhile, the central signal processing device 170 or the at least one zonal signal processing device 170Z1 to 170Z4 can perform communication between microservices when executing the plurality of microservices.

In this case, the central signal processing device 170 or the at least one zonal signal processing device 170Z1 to 170Z4 can perform Service Oriented Architecture (SOA)-based communication when executing communication between the microservices.

Meanwhile, if there is an excessive access of a specific SOA-based service or if a SOA-based service increases an operating bus occupancy intentionally without permission and thus results in overload on a channel, vehicle control is affected, thereby causing a serious threat to the functional safety of a vehicle.

Accordingly, the central signal processing device 170 or the at least one zonal signal processing device 170Z1 to 170Z4 according to an embodiment of the present disclosure can vary anomaly detection or intrusion detection depending on system requirements.

In addition, the central signal processing device 170 or the at least one zonal signal processing device 170Z1 to 170Z4 according to an embodiment of the present disclosure can generate a policy rule based on anomaly detection or intrusion detection.

Further, the central signal processing device 170 or the at least one zonal signal processing device 170Z1 to 170Z4 can perform anomaly detection or intrusion detection based on priority levels in consideration of a policy rule and performance.

Meanwhile, the at least one zonal signal processing device 170Z1 to 170Z4 can execute monitoring clients 1020Z1 to 1020Z4.

Meanwhile, the monitoring clients 1020Z1 to 1020Z4 can be provided one by one for monitoring in each network having the same subnet.

The respective monitoring clients 1020Z1 to 1020Z4 can perform anomaly detection or intrusion detection on a service packet, and can transmit the anomaly detection or intrusion detection to a monitoring server 1010.

Meanwhile, the central signal processing device 170 can execute the monitoring server 1010.

In this case, the monitoring server 1010 can be a service oriented architecture-based monitoring server, and the monitoring client 1020Z1 to 1020Z4 can be a service oriented architecture-based monitoring client.

The monitoring server 1010 can transmit a detection report about the detected anomaly to the external server 400.

Meanwhile, the external server 400 can analyze an abnormal operation and transmit an action to be performed by an in-vehicle device and a rule-set to detect the abnormal operation to the central signal processing device 170.

Meanwhile, upon receiving the anomaly detection or intrusion detection which is detected by the monitoring clients 1020Z1 to 1020Z4 executed in the at least one zonal signal processing device 170Z1 to 170Z4, the monitoring server 1010 can transmit the anomaly detection or intrusion detection to the external server 400. Accordingly, it is possible to ensure the functional safety of a vehicle based on vehicle interior or exterior monitoring.

Meanwhile, the monitoring server 1010 can buffer, store, or manage an event of an anomaly detection received from the monitoring clients 1020Z1 to 1020Z4 executed in the at least one zonal signal processing device 170Z1 to 170Z4. Accordingly, it is possible to ensure the functional safety of a vehicle based on vehicle interior or exterior monitoring.

Meanwhile, the monitoring server 1010 can receive update information for each topic from the external server 400, and can transmit the received update information to the monitoring clients 1020Z1 to 1020Z4. Accordingly, it is possible to perform updating in the the at least one zonal signal processing device.

Meanwhile, the central signal processing device 170 can also execute the monitoring clients 1010Z1 to 1010Z4 corresponding to the monitoring clients 1020Z1 to 1020Z4 executed in the at least one zonal signal processing device 170Z1 to 170Z4.

FIGS. 10A to 10C are block diagrams illustrating various examples of a signal processing device according to an embodiment of the present disclosure.

First, FIG. 10A is an exemplary block diagram of a signal processing device according to an embodiment of the present disclosure.

Referring to FIG. 10A, a signal processing device 170m according to an embodiment of the present disclosure includes a processor 175 configured to execute a hypervisor 505.

Meanwhile, the processor 175 according to an embodiment of the present disclosure executes a network interface NRa in the hypervisor 505 and executes, on the hypervisor 505, a first intrusion detector 1100 configured to perform external monitoring based on data received from the network interface NRa and a second intrusion detector 1200 configured to perform internal monitoring of event information or application information.

Accordingly, it is possible to ensure the functional safety of a vehicle based on vehicle interior or exterior monitoring. Particularly, it is possible to ensure the functional safety of a vehicle by anomaly detection or intrusion detection based on Service Oriented Architecture (SOA).

Meanwhile, the first intrusion detector 1100 can be referred to as a network Intrusion Detection System (IDS).

That is, the first intrusion detector 1100 can detect a pattern of all the transmitted or received packet in a communication session inside or outside a vehicle.

Meanwhile, the second intrusion detector 1200 can be referred to as a host Intrusion Detection System (IDS).

That is, the second intrusion detector 1200 can monitor all event information or applications inside a system.

Meanwhile, the processor 175 can execute a service virtual machine 1050 and a user virtual machine 1060 on the hypervisor 505.

Meanwhile, at least one of the service virtual machine 1050 or the user virtual machine 1060 can execute the first intrusion detector 1100 and the second intrusion detector 1200. Accordingly, it is possible to ensure the functional safety of a vehicle based on vehicle interior or exterior monitoring.

Particularly, FIG. 10A illustrates an example in which the first intrusion detector 1100 is executed by the service virtual machine 1050, and the second intrusion detector 1200 is executed by the user virtual machine 1050.

Then, a signal processing device 170m2 of FIG. 10B is similar to the signal processing device 170m of FIG. 10A, but is different in that the user virtual machine 1060 further executes a first intrusion detector 1100b in addition to the second intrusion detector 1200.

Accordingly, in addition to the network interface NRa for the first intrusion detector 1100, a second network interface NRb for the additional first intrusion detector 1100b can be further executed in the hypervisor 505.

Next, a signal processing device 170m3 of FIG. 10C is similar to the signal processing device 170m of FIG. 10A, but is different in that the first intrusion detector 1100 is executed by the user virtual machine 1060, rather than by the service virtual machine 1050.

Accordingly, the additional first intrusion detector 1100b can receive network data from the second network interface NRb rather than the network interface NRa.

Meanwhile, the signal processing device 170 can execute the first intrusion detector 1100 provided in an input or output area at a kernel stage connected to external sensors, and can execute the second intrusion detector 1200 provided in an area for monitoring a system internal event and an application.

Meanwhile, the signal processing device 170 can execute the first intrusion detector 1100 and the second intrusion detector 1200 as illustrated in any one of FIGS. 10A to 10C, depending on monitoring requirements for each system.

For example, in the case in which virtual machines access the same network, i.e., share devices or resources, the signal processing device 170 can control the first intrusion detector 1100 to be executed by the service virtual machine 1050 and the second intrusion detector 1200 to be executed by the user virtual machine 1060 as illustrated FIG. 10A, in order to monitor and detect all packet on the network. Accordingly, it is possible to perform only anomaly detection in a system while reducing the load on the system.

In another example, in the case in which each virtual machine independently accesses the network, i.e., the respective virtual machines access different devices, the signal processing device 170 can include and execute the first intrusion detector 1100 and the second intrusion detector 1200, as illustrated in FIG. 10B or FIG. 10C.

Specifically, in the case in which network detection is required on the service virtual machine 1050, the user virtual machine 1060 can independently access the network, such that the signal processing device 170 can execute the first intrusion detector 1100 in the service virtual machine 1050, and can execute the additional first intrusion detector 1100b and the second intrusion detector 1200 in the user virtual machine 1060 for hybrid intrusion detection, as illustrated in FIG. 10B.

Meanwhile, in the case in which network detection is not required on the service virtual machine 1050, the service virtual machine 1050 does not require the first intrusion detector 1100, such that the signal processing device 170 can execute the first intrusion detector 1100 and the second intrusion detector 1200 in the user virtual machine 1060 as illustrated in FIG. 10C.

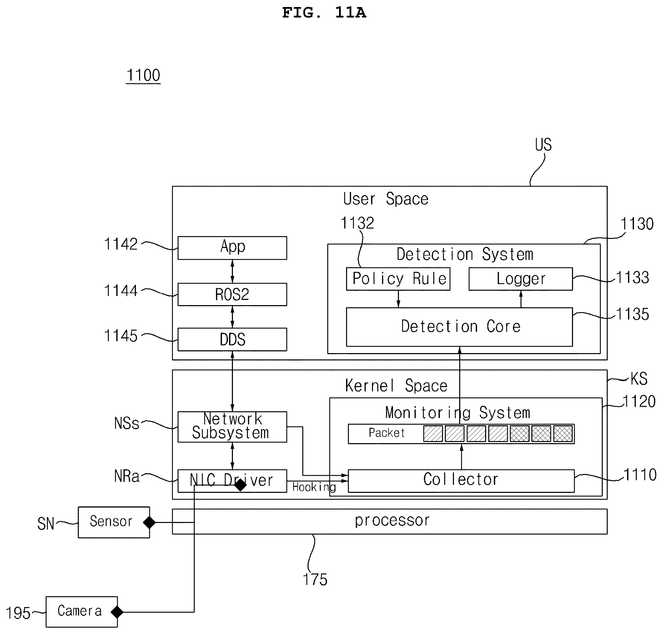

FIGS. 11A to 24B are diagrams referred to in the description of FIGS. 9 to 10C.

First, FIG. 11A is a diagram referred to in the description of the first intrusion detector of FIG. 10A.

Referring to FIG. 11A, the processor 175 in the signal processing device 170 can receive data from the camera 195 or the sensor device SN.

Meanwhile, the processor 175 can execute a kernel space KS and execute a user space US on the kernel space KS.

For example, the processor 175 can execute the hypervisor 505 and execute the kernel space KS on the hypervisor 505.

In another example, the processor 175 can execute the hypervisor 505 and can also execute the kernel space KS in the hypervisor 505.

Meanwhile, the first intrusion detector 1100 can execute, in the kernel space KS, a monitoring portion (monitoring system) 1120 configured to store transmitted or received packet in a queue through the network interface NRa and can execute, in the user space US on the kernel space KS, a detector (detection system) 1130 configured to perform anomaly detection or intrusion detection based on the packet from the monitoring portion 1120. Accordingly, it is possible to ensure the functional safety of a vehicle based on vehicle interior or exterior monitoring.

Meanwhile, the kernel space KS can execute a network interface driver NRa and a network subsystem NSs.

Meanwhile, the network interface driver NRa can transmit data from the camera 195 or the sensor device SN to a collector 1110 in the monitoring portion 1120.

Meanwhile, the user space US can execute a Data Distribution Service (DDS) 1145 and an application 1142.

Meanwhile, the detector 1130 in the first intrusion detector 1100 can execute each of a detection core 1135, a policy rule setting unit 1132, and a logger 1133.

Meanwhile, the detector 1130 in the first intrusion detector 1100 can classify packet based on a policy rule and store the classified packet in a detection queue 1138, and can perform anomaly detection or intrusion detection on the data from the detection queue 1138 based on the policy rule. Accordingly, it is possible to ensure the functional safety of a vehicle based on vehicle interior or exterior monitoring.

For example, the detector 1130 in the first intrusion detector 1100 can classify packet based on the vehicle driving environment and store the classified packet in the detection queue 1138, and can perform anomaly detection or intrusion detection on the data from the detection queue 1138 based on the policy rule. Accordingly, it is possible to ensure the functional safety of a vehicle based on vehicle interior or exterior monitoring.

Meanwhile, the first intrusion detector 1100 can receive all the transmitted or received packet in a communication session inside or outside a vehicle, and can detect a suspicious pattern.

Meanwhile, the monitoring portion 1120 can store packet, extracted from the kernel space KS, in a queue and transmit the stored packet to the detector 1130.

Meanwhile, the detector 1130 can detect abnormal operation of the collected packet based on policy rules, such as traffic, DoS Attack, Protocol, Message cycle, Internet Protocol, port, and the like.

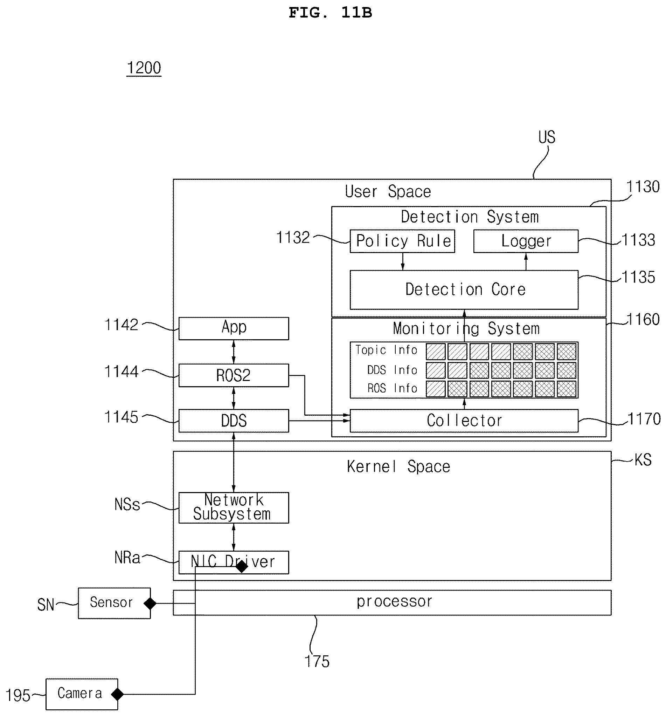

Then, FIG. 11B is a diagram referred to in the description of the second intrusion detector of FIG. 10A.

Referring to FIG. 11B, the processor 175 in the signal processing device 170 can receive data from the camera 195 or the sensor device SN.

Meanwhile, the processor 175 can execute a kernel space KS and execute a user space US on the kernel space KS.

Meanwhile, the kernel space KS can execute a network interface driver NRa and a network subsystem NSs.

Meanwhile, the user space US can execute a Data Distribution Service (DDS) 1145, a Robot Operating System 2 (ROS 2) 1144, and an application 1142.

Meanwhile, the Data Distribution Service (DDS) 1145 or the ROS 2 can transmit data to a collector 1710 in a monitoring portion 1160.

Meanwhile, the detector 1130 in the second intrusion detector 1200 can execute each of a detection core 1135, a policy rule setting unit 1132, and a logger 1133.

Meanwhile, the second intrusion detector 1200 can execute, in the user space US on the kernel space KS, the monitoring portion 1160 configured to store event information or application information in a queue, and can execute a detector 1130 configured to perform anomaly detection or intrusion detection based on the information from the monitoring portion 1160. Accordingly, it is possible to ensure the functional safety of a vehicle based on vehicle interior or exterior monitoring.

Meanwhile, the detector 1130 in the second intrusion detector 1200 can classify event information or application information based on policy rules and store the classified packet in a detection queue 1138, and can perform anomaly detection or intrusion detection on the data from the detection queue 1138 based on the policy rules. Accordingly, it is possible to ensure the functional safety of a vehicle based on vehicle interior or exterior monitoring.

Meanwhile, the second intrusion detector 1200 can monitor all the event information in a system and can detect a suspicious pattern.

Meanwhile, the monitoring portion 1160 can collect topic information and status event information of the ROS2 1144 and the DDS 1145 from the ROS2 1144 and the DDS 1145 and store the collected information in a queue, and can transmit the stored information to the detector 1130.

Meanwhile, the detector 1130 can detect abnormal operation or intrusion in the collected data based on policy rules, such as data validity and tampering of topic, application state, and the like.

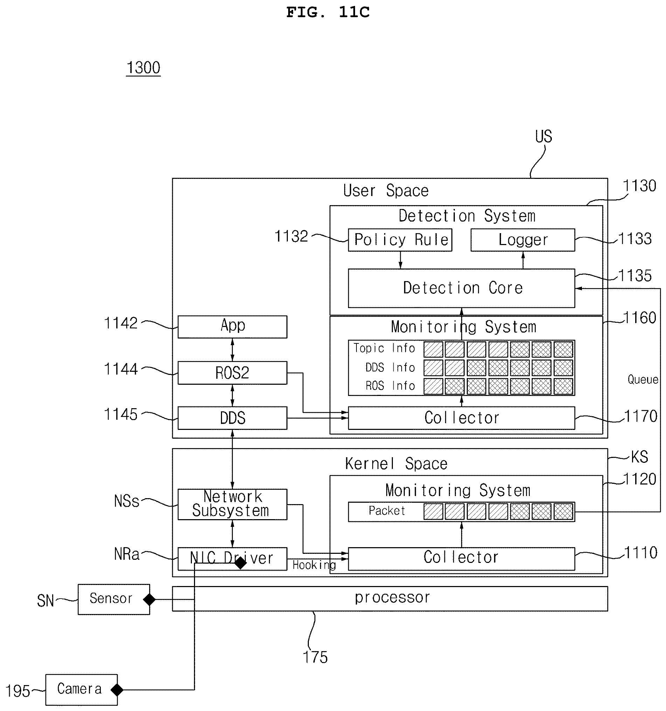

Then, FIG. 11C is a diagram referred to in the description of a hybrid intrusion detector of FIG. 10B.

Referring to FIG. 11C, a hybrid intrusion detector 1300 of FIG. 10B can execute the first intrusion detector 1100b in the user virtual machine 1060, in addition to the second intrusion detector 1200.

Meanwhile, the processor 175 can execute a kernel space KS and execute a user space US on the kernel space KS.

Meanwhile, the kernel space KS can execute a monitoring portion 1120 configured to store transmitted or received packet in a queue through the network interface NRa, and the user space US on the kernel space KS can execute the monitoring portion 1120 and a detector 1130 configured to perform anomaly detection or intrusion detection based on the packet from the monitoring portion 1120. Accordingly, it is possible to ensure the functional safety of a vehicle based on vehicle interior or exterior monitoring.

Meanwhile, the network interface driver NRa can transmit data from the camera 195 or the sensor device SN to a collector 1110 in the monitoring portion 1120.

Meanwhile, the user space US can execute a Data Distribution Service (DDS) 1145 and an application 1142.

Meanwhile, the detector 1130 in the hybrid intrusion detector 1300 can execute each of a detection core 1135, a policy rule setting unit 1132, and a logger 1133.

Meanwhile, the detector 1130 in the hybrid intrusion detector 1300 can classify packet based on policy rules and store the classified packet in a detection queue 1138, and can perform anomaly detection or intrusion detection on the data from the detection queue 1138 based on the policy rules. Accordingly, it is possible to ensure the functional safety of a vehicle based on vehicle interior or exterior monitoring.

For example, the detector 1130 in the hybrid intrusion detector 1300 can classify packet based on the vehicle driving environment and store the classified packet in the detection queue 1138, and can perform anomaly detection or intrusion detection on the data from the detection queue 1138 based on the policy rules. Accordingly, it is possible to ensure the functional safety of a vehicle based on vehicle interior or exterior monitoring.

Meanwhile, the hybrid intrusion detector 1300 can execute, in the user space US on the kernel space KS, the monitoring portion 1160 configured to store event information or application information in a queue, and can execute the detector 1130 configured to perform anomaly detection or intrusion detection based on the information from the monitoring portion 1160. Accordingly, it is possible to ensure the functional safety of a vehicle based on vehicle interior or exterior monitoring.

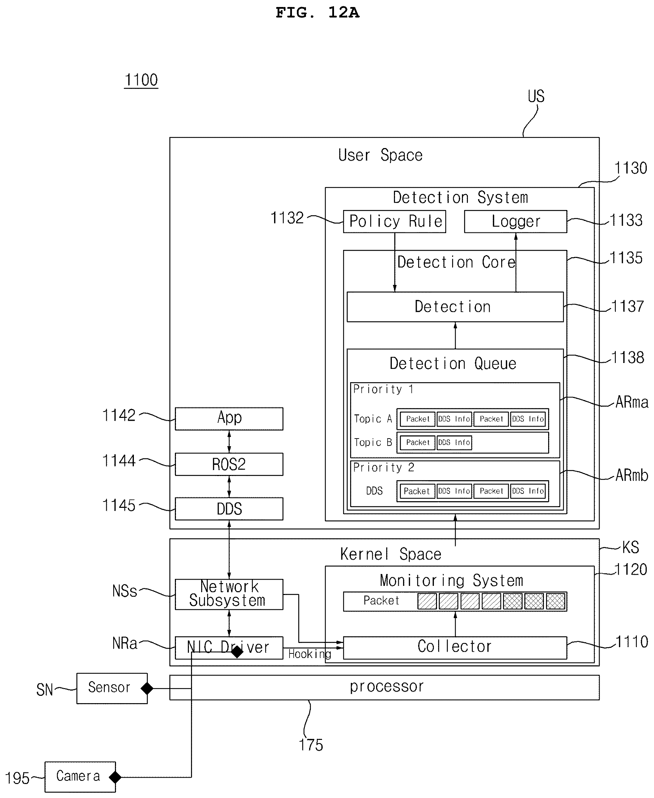

FIGS. 12A to 12C are diagrams corresponding to FIGS. 11A to 11C, respectively.

Referring to FIG. 12A, the detector 1130 of the user space US in the first intrusion detector 1100 can classify packet inside or outside a vehicle, received from the monitoring portion 1120, according to priority levels based on a policy rule and store the classified packet in a detection queue.

Meanwhile, a detection core 1137 in the detector 1130 can include a detection queue 1138 and a detection processor 1137.

Meanwhile, the detection queue 1138 can store topic A and topic B in a first priority area ARma according to priority levels based on the policy rule and store DDS data in a second priority area ARmb.

Meanwhile, the detection queue 1138 can read policy rule information and data stored in the detection queue 1138 and detect abnormal operation or intrusion based on the policy rule, such as Traffic, DoS Attack, Protocol, Message cycle, IP/Port, and the like.

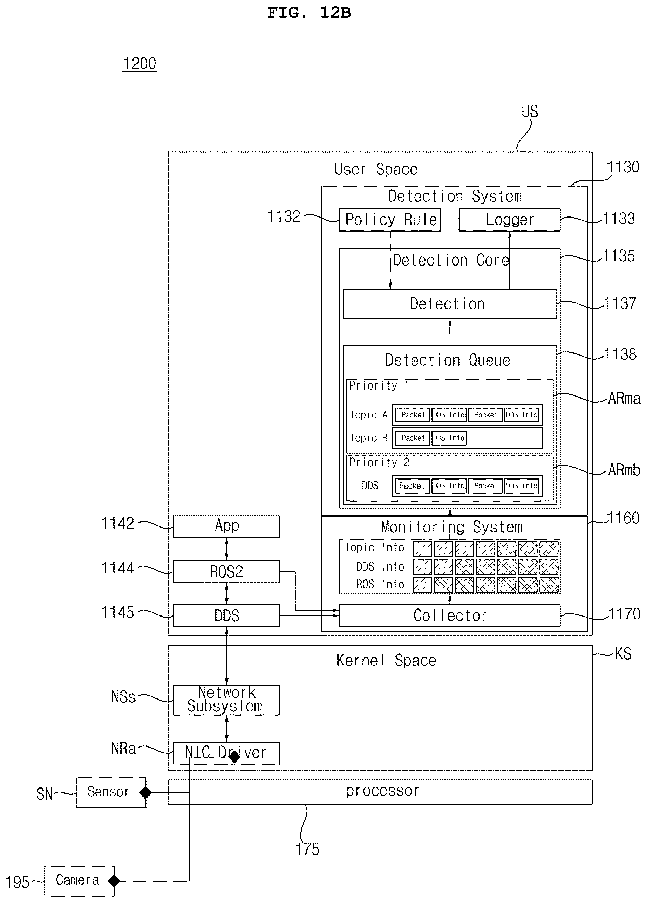

Referring to FIG. 12B, the detector 1130 of the user space US in the second intrusion detector 1200 can classify state information, received from the monitoring portion 1120, according to priority levels based on a policy rule and store the classified information in a detection queue 1138.

Meanwhile, the detection queue 1138 can read policy rule information and data stored in the first priority area ARma of the detection queue 1138 according to priority levels, and can detect abnormal operation or intrusion based on the policy rule, such as data validity and tampering of topic, application state, and the like.

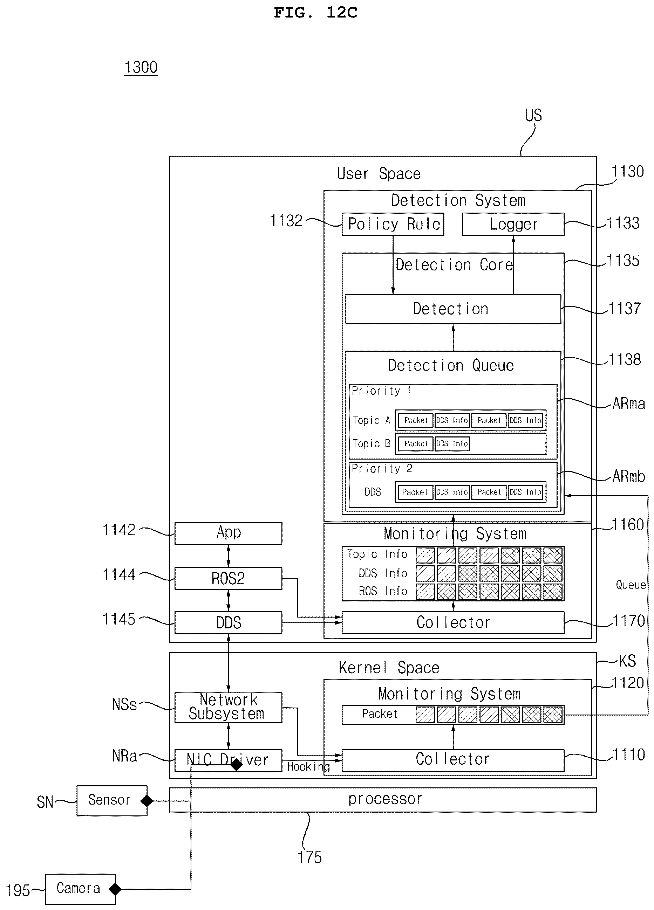

Referring to FIG. 12C, the detector 1130 of the user space US in the hybrid intrusion detector 1300 can classify data, received from the monitoring portion 1120 or the monitoring portion 1160, according to priority levels based on a policy rule and store the classified data in a detection queue 1138.

Meanwhile, the detection queue 1138 in the hybrid intrusion detector 1300 can read policy rule information and data stored in the detection queue 1138 and detect abnormal operation or intrusion based on the policy rule, such as Traffic, DoS Attack, Protocol, Message cycle, IP/Port, and the like.

Meanwhile, the detection queue 1138 in the hybrid intrusion detector 1300 can read policy rule information and data stored in the first priority area ARma of the detection queue 1138 according to priority levels, and can detect abnormal operation or intrusion based on the policy rule, such as data validity and tampering of topic, application state, and the like.

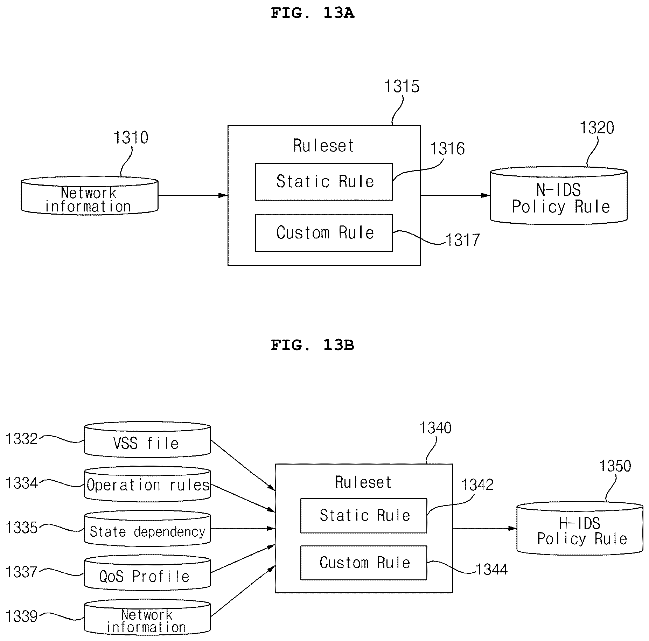

Meanwhile, the processor 175 can generate a policy rule, which will be described below with reference to FIG. 13A and subsequent figures.

FIG. 13A is a diagram illustrating an example of generating a policy rule for a first intrusion detector.

Referring to FIG. 13A, a first rule generator 1315 in the processor 175 can generate a first policy rule 1320 for the first intrusion detector 1100 based on network information 1310.

To this end, the first rule generator 1315 can include a static rule generator 1316 configured to generate a static rule which is a pre-defined detection rule, and a custom rule generator 1317 configured to generate a custom rule which is a user-defined detection rule.

Meanwhile, examples of the static rule in the first rule can include determining whether traffic exceeds maximum traffic for detecting whether the traffic is above a threshold value, determining whether traffic is less than minimum traffic for detecting whether the traffic is below a threshold value, protocol for detecting Real-Time Publish Subscribe (RTPS) protocol, Internet Protocol or port for detecting Internet Protocol or port information, denial-of-service (DoS) attack for detecting DoS attack, data length error for detecting whether a message length is different from a predetermined value, abnormal period for detecting whether a message period is different from a predetermined value, and the like.

FIG. 13B is a diagram illustrating an example of generating a policy rule for a second intrusion detector.

Referring to FIG. 13B, a second rule generator 1340 in the processor 175 can generate a second policy rule 1350 for the second intrusion detector 1200 based on operation rules 1334, vehicle signal specification (VSS) 1332, state dependency 1335, and quality of signal 1337.

Meanwhile, the second rule generator 1340 can generate the second policy rule 1350 for the second intrusion detector 1200 based further on network information 1339.

To this end, the second rule generator 1340 can include a static rule generator 1342 configured to generate a static rule which is a pre-defined detection rule, and a custom rule generator 1344 configured to generate a custom rule which is a user-defined detection rule.

Meanwhile, examples of the static rule in the second rule can include: CRC for detecting a CRC error, counter for detecting a message counter error, Enum for detecting an undefined Enum value, Overflow for detecting whether sensor data is above a specific value, Underflow for detecting whether sensor data is below a specific value, and the like.

Meanwhile, examples of the static rule in the second rule can include: seat conditions and seat adjustment for detecting whether seat condition information received during seat adjustment is different from an actual seat condition, door locked status and door open status for detecting whether a door opens when the door is locked, steering wheel state and wheel steering state for detecting whether the wheel steering state is zero degrees and the like when the steering wheel is turned 45 degrees to the left, light sensor and headlight status for detecting the case in which headlight is turned off even when the light sensor indicates night time, and the like.

Meanwhile, examples of the static rule in the second rule can include: vehicle speed and door open status for detecting the case in which the driver's door is open even when the vehicle speed is 100 km/h, camera object recognition information and LiDAR object recognition information for detecting the case in which the camera object recognition information indicates a person is detected when the LiDAR object recognition information indicates no object is detected at the corresponding position, and vehicle speed and rain sensor and wiper information for detecting the case in which wiper does not work even while driving in heavy rain, and the like.

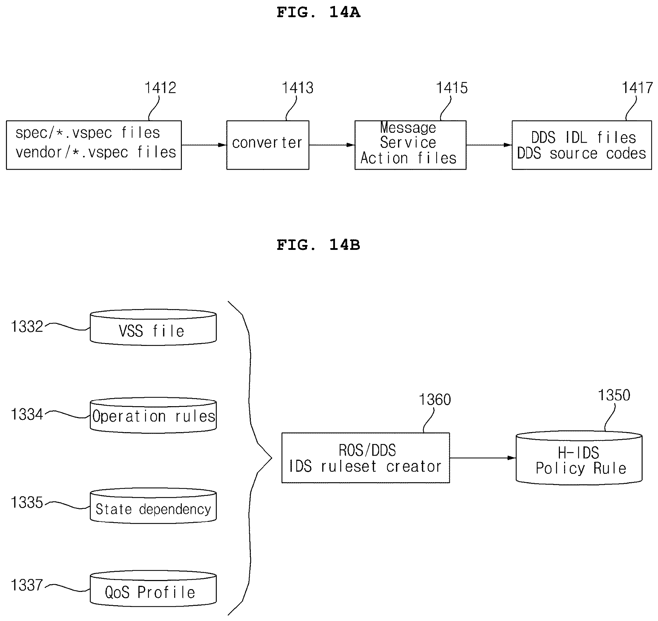

FIGS. 14A and 14B are diagrams referred to in the description of FIG. 13B.

First, FIG. 14A is a diagram illustrating an example of generating a policy rule based on Vehicle Signal Specification (VSS).

Referring to FIG. 14A, a converter 1413 in the processor 175 can convert a vehicle signal into a transmission format 1415 based on a VSS file 1412.

Then, the processor 175 can generate a program vehicle signal 1417 based on the transmission format 1415.

Next, FIG. 14B is a diagram illustrating an example of generating a policy rule based on the Vehicle Signal Specification (VSS), operation rules, state dependency, and quality of signal.

Referring to FIG. 14B, a rule set generator 1360 in the processor 175 can extract or generate a second rule 1350 based on VSS file 1332, operation rules 1334, state dependency 1335, and QoS profile 1337.

Here, the operation rules 1334 can include sensor data update cycle, node access or distribution right, quality of signal for each sensor, and the like.

Meanwhile, the state dependency 1335 can include priority definition in response to dependency between vehicle signals and exclusive states.

Meanwhile, the rule set generator 1360 can extract or generate a rule for detecting an abnormal signal based on definitions related to vehicle signals and operation.

The generated second rule 135 can include extracting a Data Node type-based read or write access method, detecting valid data based on maximum/minimum values, detecting valid data in units of data, an allowed data validation rule, topic data period checker, access or distribution checker for each topic participant or combined operation checker for combined operation between topic, and the like.

Meanwhile, the VSS file 1332 can be classified into sensor, controller, and attribute, and can have a tree structure.

Meanwhile, the VSS file 1332 can include each node type (Sensor/Actuator/Attribute/Branch), data type (int/string/array/...), allowed value (allowed), Min/Max (maximum/minimum value), unit, comment information, and the like.

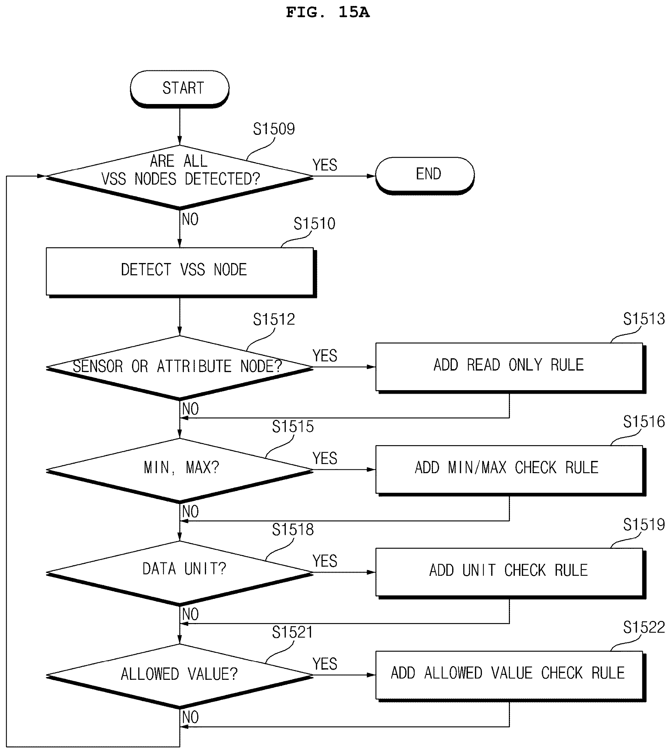

FIG. 15A is a diagram illustrating an example of generating an intrusion detection rule based on Vehicle Signal Specification (VSS).

Referring to FIG. 15A, the processor 175 can determine whether all VSS nodes are detected (S1509), and if not, the processor 175 can detect the VSS node (S1510).

That is, the processor 175 can perform detection for each vehicle signal.

Then, the processor 175 can determine whether a node in the VSS file 1332 is a sensor node or an attribute node (S1512), and if so, the processor 175 can add a Read Only rule (S1513).

For example, if a vehicle signal is a sensor or attribute signal, only the read operation can be performed, such that the processor 175 can consider a write access operation as an intrusion.

Then, the processor 175 determines whether a node in the VSS file 1332 provides Min/Max values (S1515), and if so, the processor 175 can add a Min/Max Check rule (S1516).

For example, if Min/Max values are defined in the vehicle signal, the processor 175 can determine an anomaly and consider the anomaly as an intrusion.

Then, the processor 175 can determine whether a node in the VSS file 1332 provides a data unit (S1518), and if so, the processor 175 can add a unit check rule (S1519).

For example, if a unit is defined in the vehicle signal, the processor 175 can determine an anomaly by combining a signal value with the unit.

Specifically, if a unit is km/h and a value is 500, it becomes 500 km/h, such that the processor 175 can determine it as abnormal data.

Then, the processor 175 can determine whether a node in the VSS file 1332 is an allowed value (S1512), and can add an allowed value check rule (S1513).

For example, if an allowed value is defined in the vehicle signal, the processor 175 can extract an abnormal value.

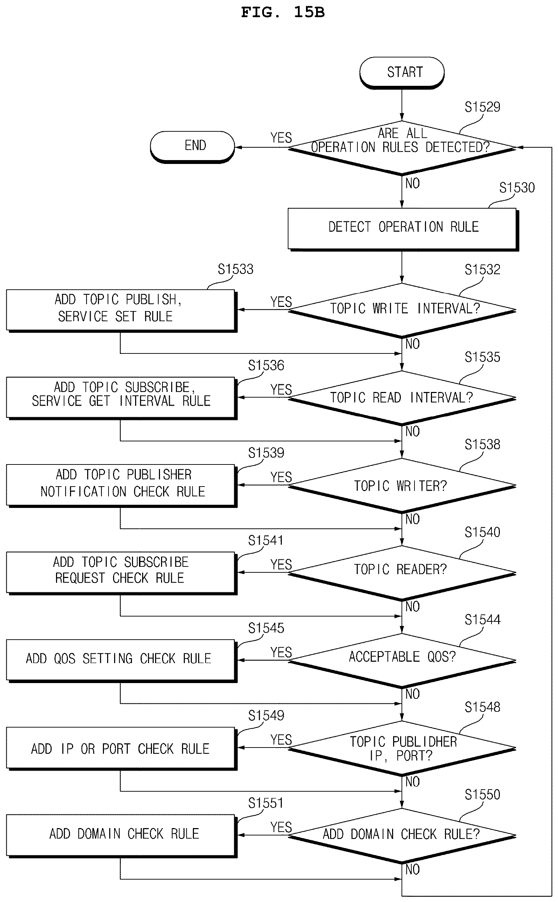

FIG. 15B is a diagram illustrating another example of generating an intrusion detection rule based on Vehicle Signal Specification (VSS).

Referring to FIG. 15B, the processor 175 can determine whether all operation rules are detected (S1529), and if not, the processor 175 can detect the operation rule (S1530). That is, the processor 175 can detect each operation rule and can generate an intrusion rule.

Then, the processor 175 can determine whether an operation rule provides Topic Write Interval (S1532), and if so, the processor 175 can add Topic Publish, Service Set rule (S1533).

For example, if the operation rule provides Topic Write Interval, the processor 175 can detect an abnormal distribution time point based on a data transmission period.

Then, the processor 175 can determine whether the operation rule provides Topic Read Interval (S1535), and if so, the processor 175 can add Topic Subscribe, Service Get Interval rule (S1536).

For example, if the operation rule provides Topic Read Interval, the processor 175 can detect an abnormal attempt to read based on the data transmission period.

Then, the processor 175 determines whether the operation rule limits a topic writer (S1538), and if so, the processor 175 can add Topic Publisher Notification Check rule (S1539).

For example, if a data provider is defined in the operation rule, the processor 175 can detect an abnormal attempt to provide data.

Then, the processor 175 determines whether the operation rule limits a topic reader (S1540), and if so, the processor 175 can add Topic Subscribe Request Check rule (S1541).

For example, if a data receiver is defined in the operation rule, the processor 175 can detect data breach or an abnormal attempt to read data.

Then, the processor 175 determines whether the operation rule includes an acceptable quality of signal (QoS) (S1544), and if so, the processor 175 can add QoS setting check rule (S1545).

For example, if there is acceptable signal quality in the operation rule, the processor 175 can detect abnormal data transmission based on data transmission rule.

Then, the processor 175 determines whether the operation rule limits Topic Publisher IP, Port (S1548), and if so, the processor 175 can add IP or Port Check rule (S1549).

For example, if there is a limitation on the Topic Publisher IP, Port in the operation rule, the processor 175 can detect abnormal data access based on network information of a data provider or receiver.

Then, the processor 175 can determine whether the operation rule limits Topic Domain (S1550), and if so, the processor 175 can add Domain Check rule (S1551).

For example, if there is a limitation on the Topic Domain in the operation rule and domain for data sharing is defined therein, the processor 175 can detect data transmission outside an allowable range.

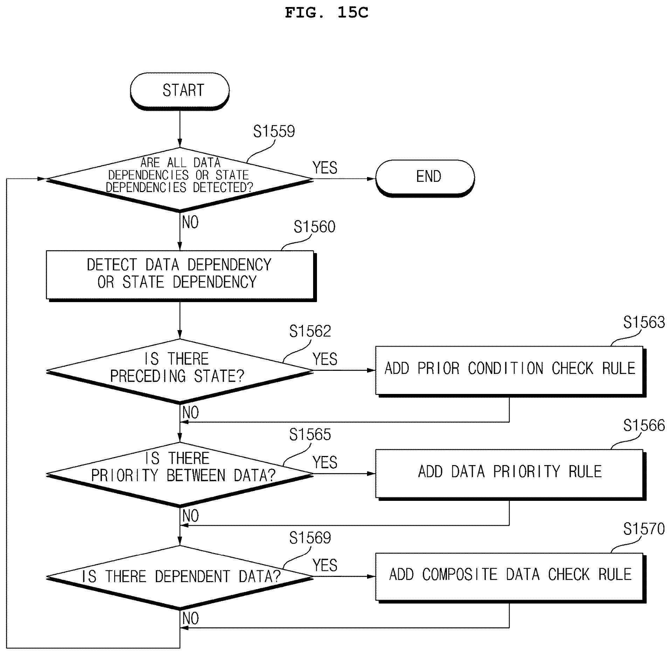

FIG. 15C is a diagram illustrating yet another example of generating an intrusion detection rule based on Vehicle Signal Specification (VSS).

Referring to FIG. 15C, the processor 175 determines whether all data dependencies or state dependencies are detected (S1559), and if not, the processor 175 can detect data dependency or state dependency (S1560).

That is, the processor 175 can detect an abnormal state by comprehensively determining different data in a vehicle domain. The processor 175 analyzes all data sets to be determined comprehensively.

Then, the processor 175 determines whether there is a preceding state in data (S1562), and if so, the processor 175 can add prior condition check rule (S1563).

Meanwhile, as for a single vehicle signal, there can be dependency on an existing state.

For example, if a gear state shifts from D to R at once without going through N or P, the processor 175 can suspect that an abnormal signal is transmitted.

Then, the processor 175 can determine whether there is priority between data (S1565), and if so, the processor 175 can add data priority rule (S1566).

That is, the processor 175 can check the priority in order to determine interdependence between data.

Then, the processor 175 can determine whether there is dependent data (S1569), and if so, the processor 175 can add composite data check rule related to the dependent data (S1570).

That is, the processor 175 can generate intrusion detection rule based on inter-dependent data.

For example, if a door unlock signal is generated while driving, the processor 175 can suspect that an abnormal signal is transmitted.

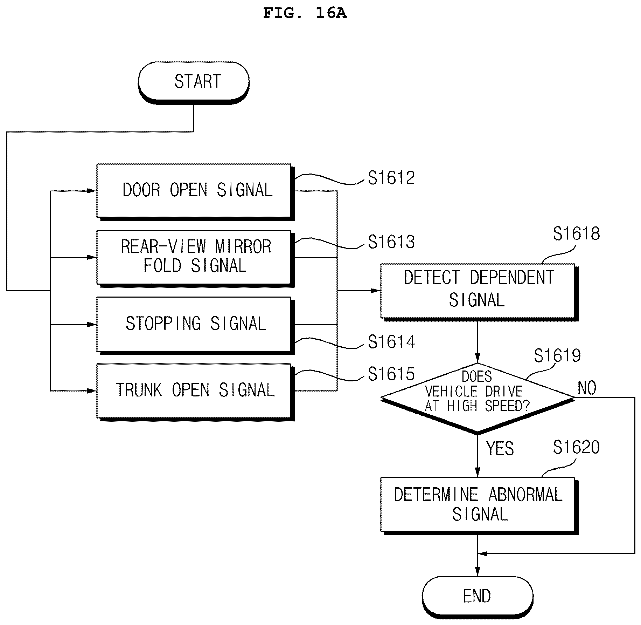

FIG. 16A is a diagram illustrating an example of intrusion detection.

Referring to FIG. 16A, the processor 175 can receive a door open signal (S1612), receive a rear-view mirror fold signal (S1613), receive a stopping signal (S1614), or receive a trunk open signal (S1615).

Then, the processor 175 can detect a dependent signal upon receiving the signals (S1618).

Subsequently, the processor 175 can determine whether a vehicle travels at a high speed in response to detection of the dependent signal (S1619), and if so, the processor 175 can determine an abnormal signal (S1620).

For example, the processor 175 can determine whether a vehicle travels at a high speed based on vehicle speed, vehicle gear state, checking of vehicle drive direction, and the like.

That is, upon receiving the door open signal, the rear-view mirror fold signal, the stopping signal, or the trunk open signal while driving a vehicle, the processor 175 can determine that an anomaly or intrusion is detected, thereby ensuring the functional safety of a vehicle based on vehicle interior or exterior monitoring.

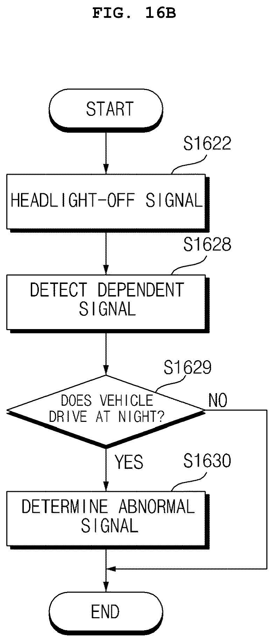

FIG. 16B is a diagram illustrating another example of intrusion detection.

Referring to FIG. 16B, the processor 175 can receive a headlight-off signal (S1622).

Then, the processor 175 can detect a dependent signal upon receiving the signal (S1628).

Then, the processor 175 can determine whether a vehicle drives at night based on detection of the dependent signal (S1629), and if so, the processor 175 can determine an abnormal signal (S1630).

For example, the processor 175 can determine whether a vehicle drives at night based on checking of the sunset time, current time, vehicle external illumination sensor, or vehicle speed, and the like.

That is, upon receiving the headlight-off signal during night driving, the processor 175 can determine that an anomaly or intrusion is detected, thereby ensuring the functional safety of a vehicle based on vehicle interior or exterior monitoring.

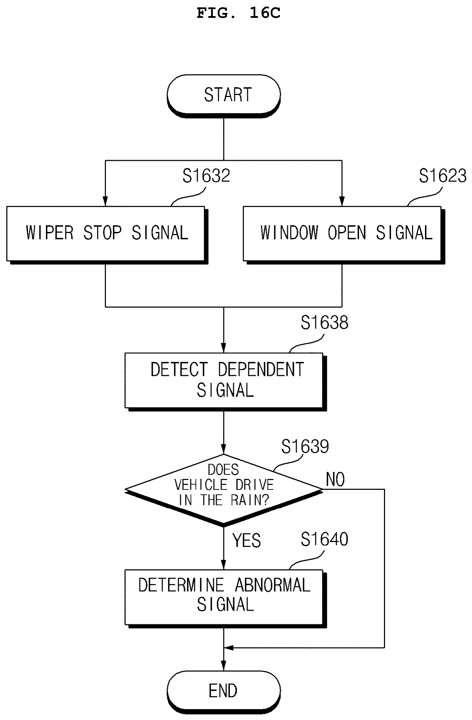

FIG. 16C is a diagram illustrating yet another example of intrusion detection.

Referring to FIG. 16C, the processor 175 can receive a wiper stop signal (S1632) or can receive a window open signal (S1623).

Then, the processor 175 can detect a dependent signal upon receiving the signal (S1638).

Next, the processor 175 can determine whether a vehicle drives in the rain based on detection of the dependent signal (S1639), and if so, the processor 175 can determine an abnormal signal (S1640).

For example, the processor 175 can determine whether it rains based on checking of a rain sensor and the like.

That is, upon receiving the wiper stop signal or the window open signal during driving in the rain, the processor 175 can determine that an anomaly or intrusion is detected, thereby ensuring the functional safety of a vehicle based on vehicle interior or exterior monitoring.

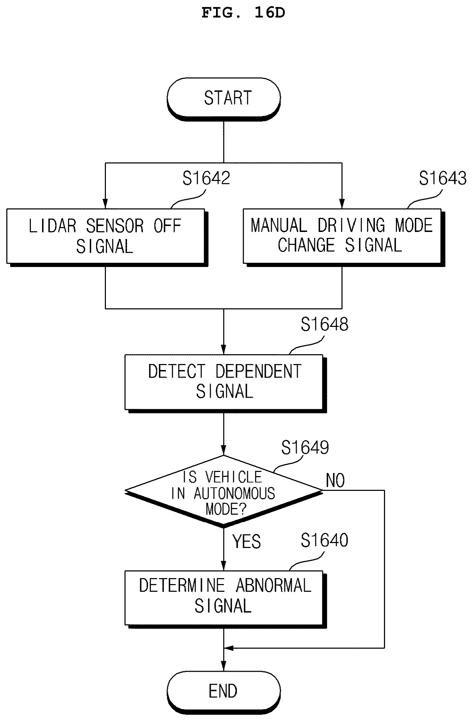

FIG. 16D is a diagram illustrating yet another example of intrusion detection.

Referring to FIG. 16D, the processor 175 can receive a lidar sensor off signal (S1642) or can receive a manual driving mode change signal (S1643).

Then, the processor 175 can detect a dependent signal upon receiving the signal (S1648).

Subsequently, the processor 175 can determine whether a vehicle is in an autonomous mode based on detection of the dependent signal (S1649), and if so, the processor 175 can determine an abnormal signal (S1640).

For example, the processor 175 can determine whether a vehicle is in the autonomous mode based on checking of autonomous driving mode or checking of a driver's sleep state, and the like.

That is, upon receiving the lidar sensor off signal or the manual driving mode change signal during autonomous driving, the processor 175 can determine that an anomaly or intrusion is detected, thereby ensuring the functional safety of a vehicle based on vehicle interior or exterior monitoring.

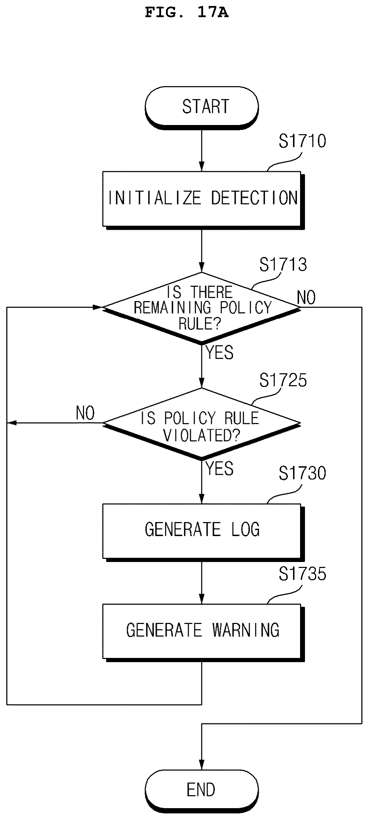

FIG. 17A is a diagram illustrating an example of operation of intrusion detection.

Referring to FIG. 17A, the processor 175 initializes detection (S1710).

Then, the processor 175 verifies whether there is a remaining policy rule (S1713), and if so, the processor 175 verifies whether the policy rule is violated (S1725), and if so, the processor 175 can generate a log (S1730) and generate a warning (S1735).

That is, the processor 175 can detect an abnormal operation based on the policy rule.

Meanwhile, upon detecting an abnormal operation, the processor 175 can generate a log and a warning by substituting the respective rules one by one.

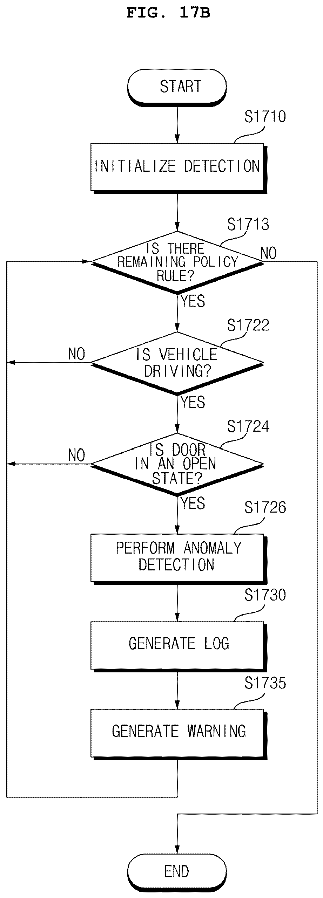

FIG. 17B is a diagram illustrating an example of operation of intrusion detection.

Referring to FIG. 17B, the processor 175 initializes detection (S1710).

Then, the processor 175 can verify whether there is a remaining policy rule (S1713), and if so, the processor 175 can determine whether a vehicle is driving (S1722), and if so, the processor 175 can determine whether the door is in an open state (S1724).

If the door is in an open state while driving, the processor 175 performs anomaly detection (S1726), and then can generate a log (S1730) and generate a warning (S1735).

For example, the remaining policy rule can be seat conditions and seat adjustment rule for detecting whether seat condition information received during seat adjustment is different from an actual seat condition, door locked status and door open status rule for detecting whether a door opens when the door is locked, steering wheel state and wheel steering state rule for detecting whether the wheel steering state is zero degrees and the like when the steering wheel is turned 45 degrees to the left, light sensor and headlight status rule for detecting the case in which headlight is turned off even when the light sensor indicates night time, vehicle speed and door open status rule for detecting the case in which the driver's door is open even when the vehicle speed is 100 km/h, and the like.

Meanwhile, upon receiving door open information while driving at 100 km/h, the processor 170 can generate a log and generate a warning in response to detecting an abnormal operation based on the vehicle speed and door open state rule.

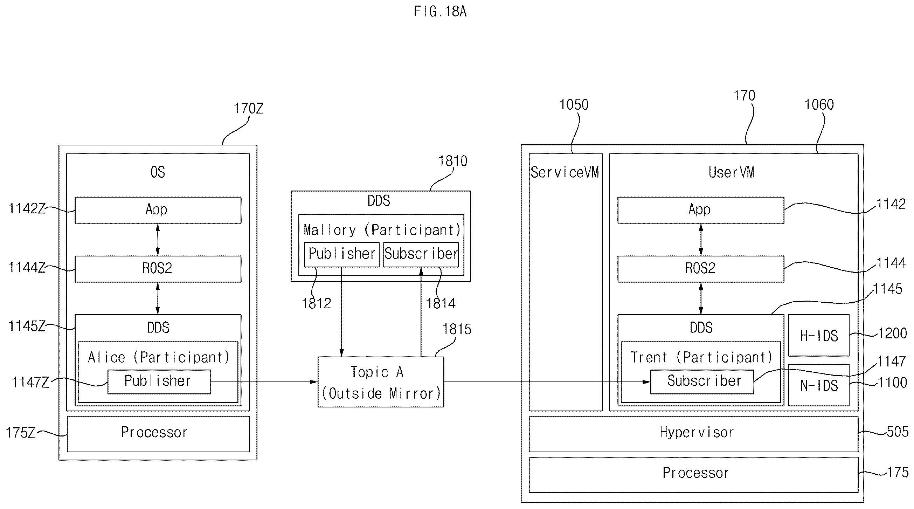

FIG. 18A is a diagram illustrating an example of an attack on a signal processing device.

Referring to FIG. 18A, a processor 175Z in the zonal signal processing device 170Z can execute a data distribution service 1145Z, an ROS2 1144Z, and an application 1142Z.

Meanwhile, a publisher 1147Z in the data distribution service 1145Z can transmit topic A associated with an outside mirror to the signal processing device 170 in every message period.

Meanwhile, the processor 175 in the signal processing device 170 can execute the hypervisor 505, and can execute the data distribution service 1145, the ROS2 1144, and the application 1142 on the hypervisor 505.

Meanwhile, the processor 175 in the signal processing device 170 can execute the hypervisor 505, and can execute the first intrusion detector 1100 and the second intrusion detector 1200 on the hypervisor 505.

Meanwhile, a subscriber 1147 in the data distribution service 1145 can receive topic A associated with the outside mirror from the zonal signal processing device 170Z in every message period.

Meanwhile, a data distribution service 1810 in an attacker can execute a publisher 1812 and a subscriber 1814.

Particularly, the subscriber 1814 in the data distribution service 1810 by the attacker can collect data of topic A, and the publisher 1812 can attempt to attack topic A.

Accordingly, the processor 175 in the signal processing device 170 can receive data about topic A on which the attack is attempted.

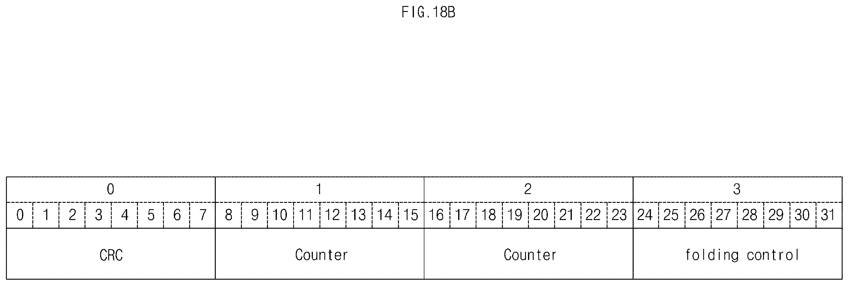

FIG. 18B is a diagram illustrating an example of a message format of topic A.

Referring to FIG. 18B, topic A can include CRC, counter, folding status, and folding control data.

The publisher 1812 in the data distribution service 1810 by the attacker can attempt to attack at least one of the CRC, counter, folding status, or folding control data.

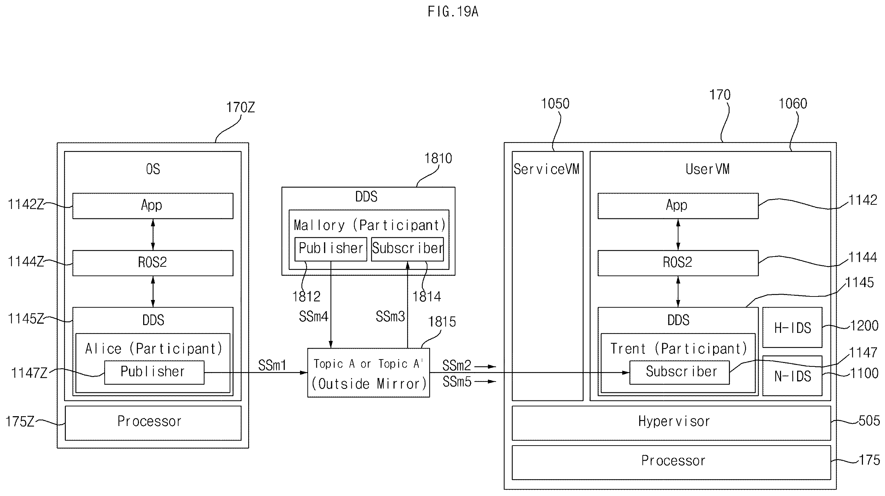

FIG. 19A is a diagram illustrating in detail an example of an attack on the signal processing device of FIG. 18A.

Referring to FIG. 19A, the data distribution service 1145Z in the zonal signal processing device 170Z can receive normal topic A (SSm1).

In the absence of an attack, the data distribution service 1145 in the signal processing device 170 can receive normal topic A (SSm2).

Meanwhile, the subscriber 1814 in the data distribution service 1810 in the attacker can receive topic A (SSm3).

Then, the publisher 1812 in the data distribution service 1810 in the attacker can make an unauthorized posting attack on topic A (SSm4).

Accordingly, the data distribution service 1145 in the signal processing device 170 can receive topic A' which has been subject to the unauthorized posting attack (SSm5).

For example, the unauthorized posting attack can cause an increase in traffic for topic A', a shift of a message period, and the like.

In another example, the unauthorized posting attack allows an unauthorized Internet Protocol (IP) to participate in the data distribution service domain.

Meanwhile, the first intrusion detector 1100 in the signal processing device 170 can detect, based on external monitoring, the Internet Protocol or port of data from the data distribution service 1145, or detect whether traffic exceeds a reference traffic, or detect an abnormal period, thereby ensuring the functional safety of a vehicle based on vehicle interior or exterior monitoring.

Meanwhile, the second intrusion detector 1200 in the signal processing device 170 can detect based on internal monitoring whether quality of service (QoS) policy of data from the data distribution service is violated, thereby ensuring the functional safety of a vehicle based on vehicle interior or exterior monitoring.

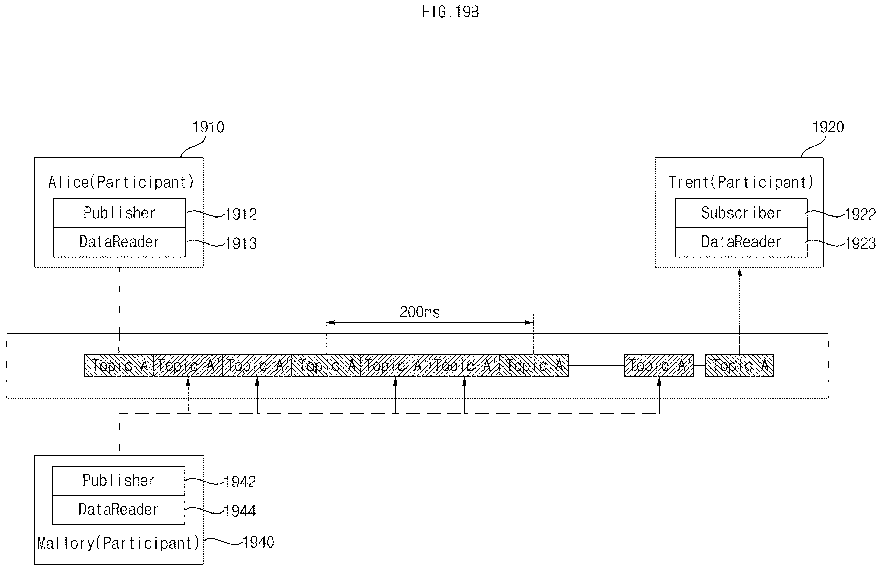

FIG. 19B is a diagram illustrating an example in which a message period is shifted due to an attack.

Referring to FIG. 19B, a data distribution service 1910 in the zonal signal processing device 170Z can transmit normal topic A.

Meanwhile, the data distribution service 1910 can execute Publisher 1912 and DataReader 1913.

Meanwhile, a data distribution service 1940 in the attacker can transmit unauthorized topic A'.

Meanwhile, the data distribution service 1940 can execute Publisher 1942 and DataReader 1943.

Meanwhile, a data distribution service 1920 in the signal processing device 170 can receive topic A.

In this case, due to the unauthorized topic A' from the data distribution service 1940 in the attacker, a message period is not 200ms, but is shifted.

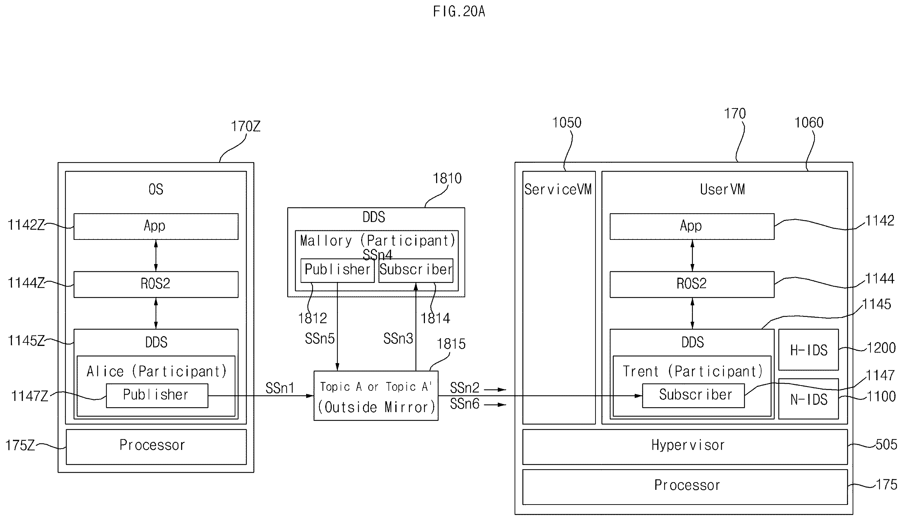

FIG. 20A is a diagram illustrating another example of an attack on the signal processing device of FIG. 18A.

Referring to FIG. 20A, the data distribution service 1145Z in the zonal signal processing device 170Z can transmit normal topic A (SSn1).

In the absence of an attack, the data distribution service 1145 in the signal processing device 170 can receive normal topic A (SSn2).

Meanwhile, the subscriber 1814 in the data distribution service 1810 in the attacker can receive topic A (SSn3).

Then, the publisher 1812 or the subscriber 1814 in the data distribution service 1810 in the attacker can analyze the content of topic A (SSn4).

Subsequently, the publisher 1812 in the data distribution service 1810 in the attacker can tamper information about topic A (SSn5).

Accordingly, the data distribution service 1145 in the signal processing device 170 can receive topic A' with tampered content (SSn6).

Meanwhile, the first intrusion detector 1100 in the signal processing device 170 can detect, based on external monitoring, the Internet Protocol or port of data from the data distribution service 1145, or detect whether traffic exceeds a reference traffic, or detect an abnormal period, thereby ensuring the functional safety of a vehicle based on vehicle interior or exterior monitoring.

Meanwhile, the second intrusion detector 1200 in the signal processing device 170 can detect based on internal monitoring whether quality of service (QoS) policy of data from the data distribution service is violated, thereby ensuring the functional safety of a vehicle based on vehicle interior or exterior monitoring.

Meanwhile, the second intrusion detector 1200 in the signal processing device 170 can detect abnormality in IDL Counter, or detect whether a custom rule for folding status and folding control is violated, and the like.

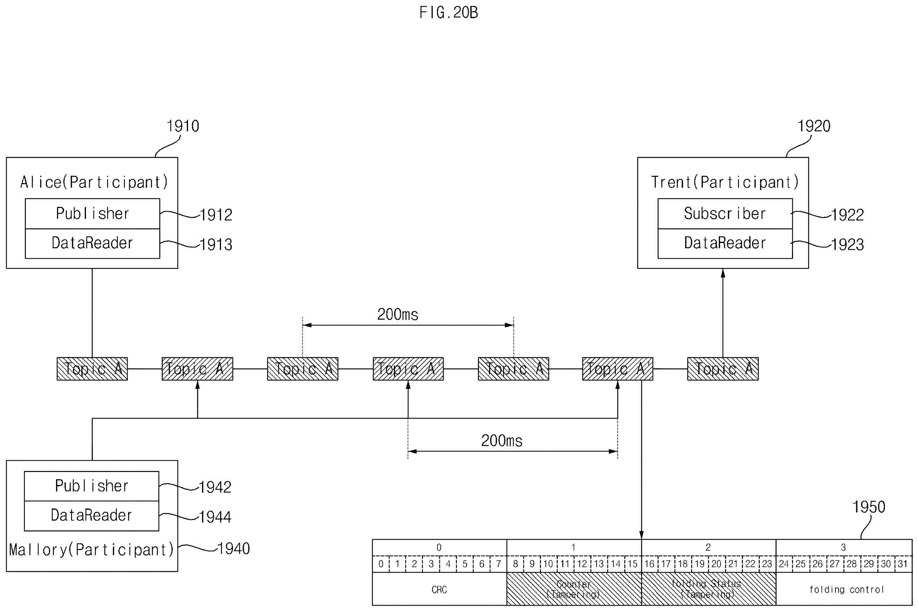

FIG. 20B is a diagram illustrating an example of topic tampered by an attack.

Referring to FIG. 20B, the data distribution service 1910 in the zonal signal processing device 170Z can transmit normal topic A.

Meanwhile, the data distribution service 1940 in the attacker can transmit topic A' with tampered content.

For example, the data distribution service 1940 in the attacker can transmit topic A' with tampered folding status.

Meanwhile, the data distribution service 1920 in the signal processing device 170 can receive normal topic A and topic A' with tampered content.

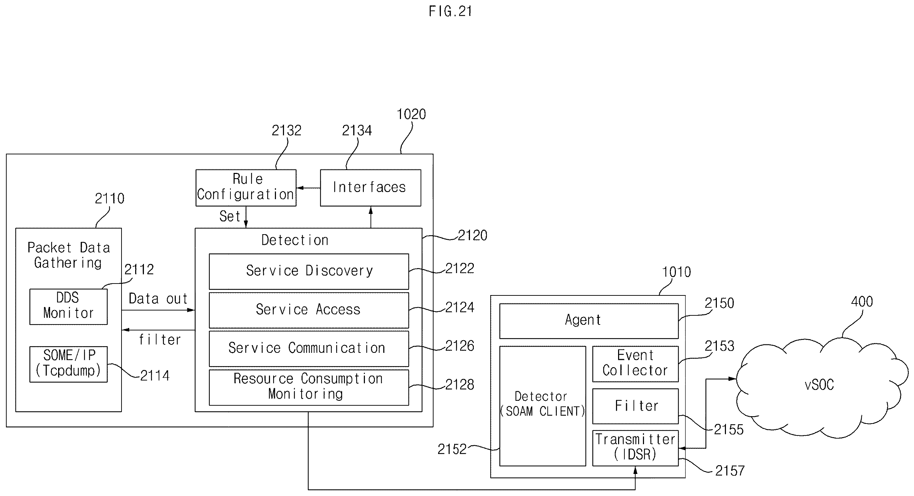

FIG. 21 is an exemplary internal block diagram of a monitoring client and a monitoring server.

Referring to FIG. 21, a monitoring client 1020 can gather packet data, or detect a anomaly in the SOA service, or set filter rules.

Meanwhile, the monitoring client 1020 can perform anomaly detection on the collected data based on an anomaly detection filter rule, and can report a detected event.

To this end, the monitoring client 1020 can include a Packet Data Gathering processor 2110, a detector 2120, a rule configuration processor 2132, and an interface 2134.

The Packet Data Gathering processor 2110 can include a data distribution service monitor 2112 and SOME/IP 2124.

The detector 2120 can execute Service Discovery 2122, Service Access 2124, Service Communication 2126, and Resource Consumption Monitoring 2128.

Meanwhile, the monitoring server 1010 can include or execute a detector 2152, an event collector 2153, a filter 2155, a transmitter 2157, and an agent 2150.

Meanwhile, the transmitter 2157 in the monitoring server 1010 can receive an event from an external server 400 and can receive an event of an anomaly detection report from the monitoring client 1020.

Meanwhile, the monitoring server 1010 can function as an intrusion detection (IDS) agent, and can transmit an event of an anomaly detection to the external server 400 and receive filter rule information from the external server 400 so that the filter rule can be set for the monitoring client 1020.

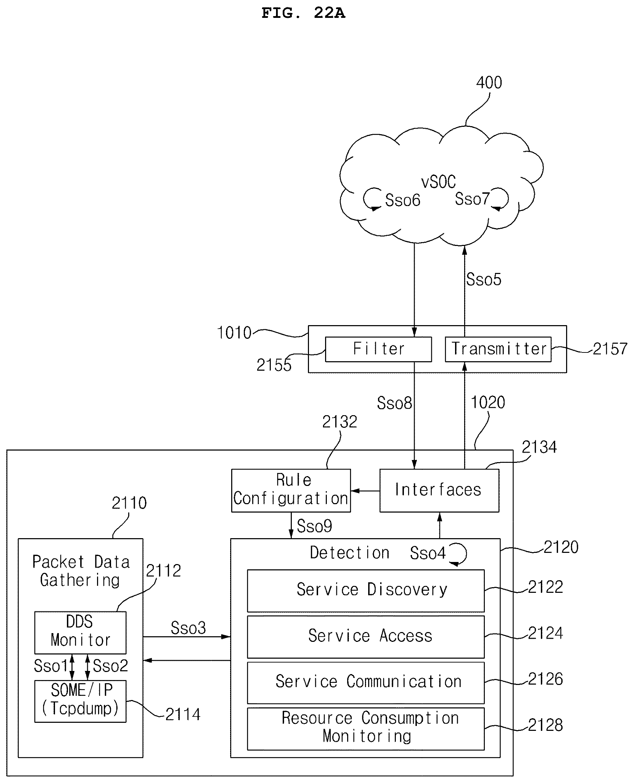

FIG. 22A is a diagram referred to in the description of FIG. 21.

Referring to FIG. 22A, the Packet Data Gathering processor 2110 in the monitoring client 1020 can gather messages (SSo1), and can analyze a message period and size for each topic (SSo2).

Then, the Packet Data Gathering processor 2110 transmits the analyzed information to the detector 2120 (SSo3).

Next, the detector 2120 can compare the analyzed information with a table for each topic (SSo4).

For example, the table for each topic can be the following Table 1.

**[Table 1]**

| Priority | Topic name | Maximum message period | Size of each message | Action upon anomaly detection |
|---|---|---|---|---|
| 1 | Vehicle control | 100 Hz (10 ms) | 100KB | Generate warning |
| 2 | Object information | 100 Hz (10 ms) | 1MB | Generate warning |
| 3 | GPS information | 10 Hz (100 ms) | 100KB | Generate warning, stop monitoring |
| 4 | Tire pressure | 0.1 Hz (10 s) | 10KB | Generate warning, stop monitoring |

Meanwhile, the monitoring server 1010 can receive the analyzed information from the monitoring client 1020, and can transmit the analyzed information to the external server 400 (SSo5).

Then, the external server 400 can perform training by using the analyzed information (SSo6), and can generate a table for each topic which is updated based on the training result (SSo7).

Meanwhile, the monitoring server 1010 can receive the updated table for each topic from the external server 400 (SSo8), and can transmit the updated table for each topic to the monitoring client 1020.

Meanwhile, the Rule Configuration processor 2132 in the monitoring client 1020 can perform resetting with the updated table for each topic (SSo9).

As illustrated in FIG. 22A, the monitoring client 1020 can perform anomaly detection by comparison with allowed resource criteria, such as a topic generation period, data volume, and the like.

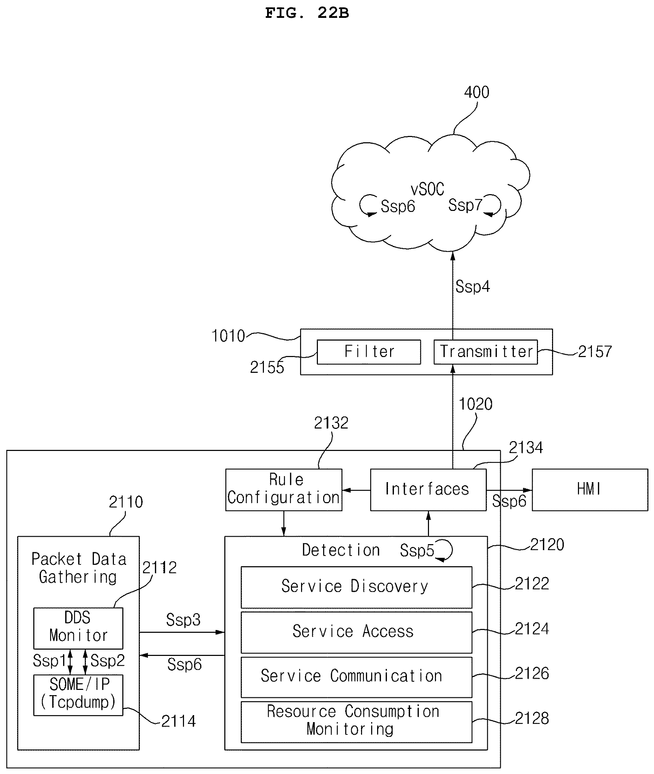

FIG. 22B is a diagram referred to in the description of FIG. 21.

Referring to FIG. 22B, the Packet Data Gathering processor 2110 in the monitoring client 1020 can gather messages (SSp1), and can analyze a message period and size for each topic (SSp2).

Then, the Packet Data Gathering processor 2110 transmits the analyzed information to the detector 2120 (SSp3).

Meanwhile, the monitoring server 1010 can receive the analyzed information from the monitoring client 1020 and analyze the received information, and if the analyzed information exceeds a total allowable occupancy, the monitoring server 1010 can transmit the analyzed information to the external server 400 (SSp4).

Meanwhile, the detector 2120 in the monitoring client 1020 can compare the analyzed information with a table for each topic, such as the above Table 1 (SSp5).

Then, upon detecting an anomaly, the detector 2120 in the monitoring client 1020 can perform a corresponding action (SSp6).

For example, the detector 2120 in the monitoring client 1020 can perform anomaly detection in response to exceeding a message size or message period for each topic, and can perform a corresponding action, such as generating a warning or stopping monitoring.

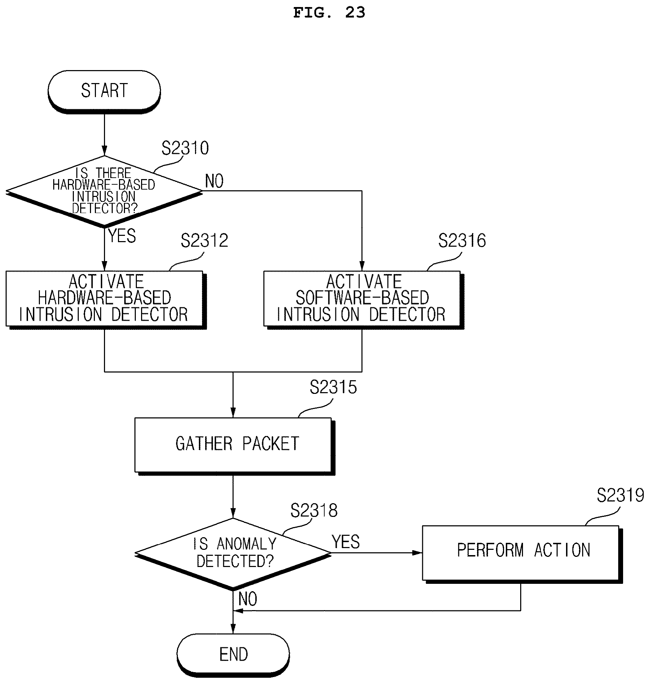

FIG. 23 is a flowchart illustrating an example of gathering packet data.

Referring to FIG. 23, the processor 175 in the signal processing device 170 can determine whether there is a hardware-based intrusion detector (S2310), and if so, the processor 175 can activate the hardware-based intrusion detector (S2312).

Meanwhile, if there is no hardware-based intrusion detector, the processor 175 can activate a software-based intrusion detector (S2316).

Then, the processor 175 can gather packet (S2315).

For example, when the hardware-based intrusion detector is activated, the hardware-based intrusion detector can gather packet.

In another example, when the software-based intrusion detector is activated, the software-based intrusion detector can gather packet.

Then, the processor 175 can determine the presence of an anomaly based on the gathered packet, and upon detecting an anomaly, the processor 175 can perform a corresponding action (S2319).

That is, when the hardware-based intrusion detector is in operation, the processor 175 can deactivate the software-based intrusion detector, thereby ensuring the functional safety of a vehicle based on vehicle interior or exterior monitoring.

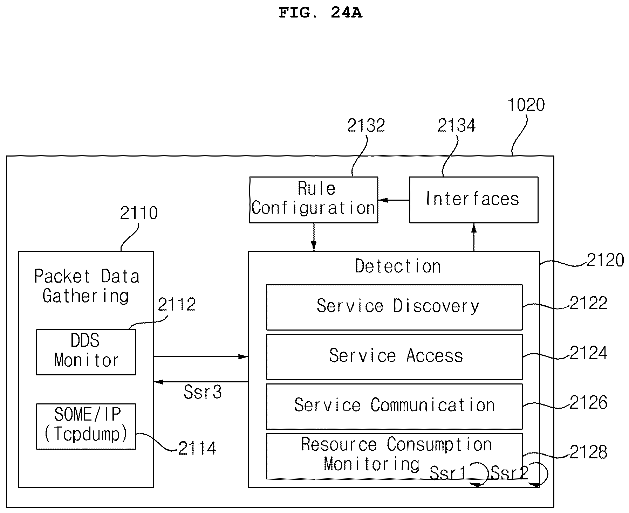

FIG. 24A is a diagram illustrating a method of gathering data based on priority in consideration of performance.

Referring to FIG. 24A, Resource Consumption Monitoring 2128 in the monitoring client 1020 can monitor a system state, such as CPU or RAM usage, network bandwidth, etc. (SSr1), and can analyze the system state (SSr2).

Then, if spare capacity or bandwidth is not sufficient, the detector 2120 in the monitoring client 1020 can transmit an instruction to stop collecting topic with low priority to the Packet Data Gathering processor 2110 (SSr3).

For example, if spare capacity or bandwidth is not sufficient, the detector 2120 in the monitoring client 1020 can transmit an instruction to stop collecting infotainment data with low priority.

That is, the processor 175 can collect topic or stop collecting topic according to priority levels, based on system state monitoring and occupancy or bandwidth of the processor 175, thereby ensuring the functional safety of a vehicle based on vehicle interior or exterior monitoring.

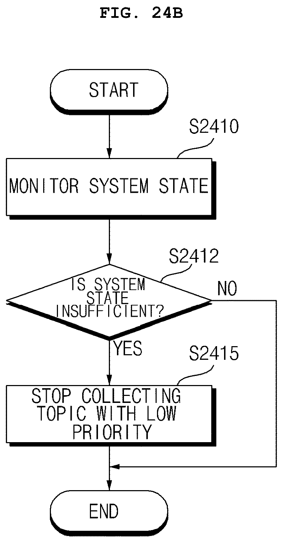

FIG. 24B is a diagram illustrating an example of a method of gathering data based on priority in consideration of performance.

Referring to FIG. 24B, Resource Consumption Monitoring 2128 in the monitoring client 1020 can perform monitoring of a system state (S2410) and analyze the system state to determine whether the system state is insufficient (S2412).

If the system state is insufficient, the detector 2120 in the monitoring client 1020 can stop collecting topic with low priority.

For example, if spare capacity or bandwidth is not sufficient, the detector 2120 in the monitoring client 1020 can transmit an instruction to stop collecting infotainment data with low priority (S2415).

Accordingly, it is possible to ensure the functional safety of a vehicle based on vehicle interior or exterior monitoring.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to execute a hypervisor,
wherein the processor is configured to execute a network interface in the hypervisor and to execute a first intrusion detector and a second intrusion detector on the hypervisor, the first intrusion detector configured to perform external monitoring based on data received from the network interface, and the second intrusion detector configured to perform internal monitoring of event information or application information.

2. The signal processing device of claim 1, wherein the processor is configured to execute a service virtual machine and a user virtual machine on the hypervisor,
wherein at least one of the service virtual machine or the user virtual machine is configured to execute the first intrusion detector and the second intrusion detector.

3. The signal processing device of claim 1, wherein the first intrusion detector is configured to:
execute a monitoring portion to store, in a queue, packet transmitted or received through the network interface in a kernel space; and
execute a detector configured to perform anomaly detection or intrusion detection based on the packet from the monitoring portion in a user space on the kernel space.

4. The signal processing device of claim 3, wherein the detector in the first intrusion detector is configured to classify the packet based on a policy rule and store the classified packet in a detection queue, and to perform the anomaly detection or the intrusion detection on data from the detection queue based on the policy rule.

5. The signal processing device of claim 3, wherein the detector in the first intrusion detector is configured to classify the packet based on vehicle driving environment and store the classified packet in the detection queue, and to perform the anomaly detection or the intrusion detection on the data from the detection queue based on the policy rule.

6. The signal processing device of claim 1, wherein the second intrusion detector is configured to execute a monitoring portion to store the event information or the application information in a queue in the user space on the kernel space, and to execute a detector to perform anomaly detection or intrusion detection based on the information from the monitoring portion.

7. The signal processing device of claim 6, wherein the detector in the second intrusion detector is configured to classify the event information or the application information based on a policy rule and store the information in a detection queue, and to perform the anomaly detection or the intrusion detection on data from the detection queue based on the policy rule.

8. The signal processing device of claim 1, wherein the processor is configured to generate a first policy rule for the first intrusion detector based on network information, and to generate a second policy rule for the second intrusion detector based on the network information, an operation rule, vehicle signal specification (VSS), state dependency, and quality of signal.

9. The signal processing device of claim 1, wherein upon receiving a door open signal, a rear-view mirror fold signal, a stopping signal, or a trunk open signal while driving a vehicle, the processor is configured to determine anomaly detection or intrusion detection.

10. The signal processing device of claim 1, wherein upon receiving a headlight-off signal during night driving, the processor is configured to determine anomaly detection or intrusion detection.

11. The signal processing device of claim 1, wherein upon receiving a wiper stop signal or a window open signal during driving in rain, the processor is configured to determine anomaly detection or intrusion detection.

12. The signal processing device of claim 1, wherein the processor is configured to receive data, received from a zonal signal processing device, through a Data Distribution Service (DDS),
wherein the first intrusion detector is configured to detect an Internet Protocol or port of data from the data distribution service, or to detect whether a traffic exceeds a reference traffic, or to detect an abnormal period.

13. The signal processing device of claim 12, wherein the second intrusion detector is configured to detect whether quality of service (QoS) policy of data from the data distribution service is violated.

14. The signal processing device of claim 1, wherein the processor is configured to execute a monitoring server,
wherein upon receiving an anomaly detection or intrusion detection detected by a monitoring client executed in at least one zonal signal processing device, the monitoring server is configured to transmit the anomaly detection or intrusion detection to an external server.

15. The signal processing device of claim 1, wherein the processor is configured to execute a monitoring server,
wherein the monitoring server is configured to buffer, store, or manage an event of an anomaly detection received from the monitoring client executed in the at least one zonal signal processing device.

16. The signal processing device of claim 15, wherein the monitoring server is configured to receive update information for each topic from the server, and to transmit the received update information to the monitoring client.

17. The signal processing device of claim 1, wherein in response to a hardware-based intrusion detector being in operation, the processor is configured to deactivate a software-based intrusion detector.

18. The signal processing device of claim 1, wherein the processor is configured to collect topic or stop collecting topic according to priority levels, based on system state monitoring and occupancy or bandwidth of the processor.

19. A vehicle display apparatus comprising:
at least one display; and
a signal processing device configured to output an image signal to the display,
wherein the signal processing device comprises the signal processing device of any one of claims 1 to 18.
